# EUROPEAN PATENT SPECIFICATION

(11) **EP 3 097 175 B1**
(45) Date of publication and mention of the grant of the patent: **17.10.2018**
(21) Application number: 15700626.3
(22) Date of filing: 08.01.2015
(51) Int. Cl.: C11D 3/42, C11D 11/00, C11D 3/40

(54) **FABRIC TREATMENT COMPOSITION**
GEWEBEBEHANDLUNGSZUSAMMENSETZUNG
COMPOSITION DE TRAITEMENT DE TEXTILE

(30) Priority: 22.01.2014 US 201461930109 P
(43) Date of publication of application: 30.11.2016
(73) Proprietor: The Procter & Gamble Company, Cincinnati, OH 45202 (US)
(72) Inventor: MIRACLE, Gregory, Scot, Cincinnati Ohio 45202 (US); SOUTER, Philip, Frank, Tyne and Wear NE12 9TS (GB); JACKSON, Michelle, Newcastle upon Tyne Tyne and Wear NE12 9TS (GB); LANT, Neil Joseph, Newcastle upon Tyne Tyne and Wear NE12 9TS (GB); BRADLEY, Neil, Newcastle upon Tyne Tyne and Wear NE12 9TS (GB); PATTERSON, Steven, George, Tyne and Wear NE12 9TS (GB); MOON, Andrew, Philip, Tyne and Wear NE12 9TS (GB)
(74) Representative: Peet, Jillian Wendy
(86) International application number: PCT/US2015/010611
(87) International publication number: WO 2015/112341

(56) References cited:
- EP-B1- 0 006 271
- WO-A1-2007/023087
- WO-A2-2010/100028
- US-A- 4 283 197

## Description

### FIELD OF INVENTION

This invention relates to detergent compositions comprising optical brighteners and fabric shading dyes and methods of treating a fabric surface with such compositions.

### BACKGROUND OF THE INVENTION

As textile substrates age, their color tends to fade or yellow due to for example, exposure to light, air, soil, and natural degradation of the fibers that comprise the substrates. To counteract this unwanted effect, laundry detergent manufacturers incorporate ingredients such as fabric shading dyes into their products. Whilst such dyes can increase the perception of whiteness, inherently they decrease the light reflected and their deposition across different fabric types can vary. A build up of fabric shading dye over multiple washes, or a greater than optimal deposition of a dye on a fabric may be problematic. Optical brighteners deposit onto fabric surfaces and absorb the invisible ultra-violet radiation in light and re-emit part of this energy in the blue to violet visible region. This fluorescence increases the appearance of whiteness. The present inventors have found that this problem can be mitigated by use of specific optical brighteners. Compositions containing optical brighteners are disclosed in EP6271, US4283197, WO2007/023087 and WO2010/100028.

### SUMMARY OF THE INVENTION

This invention relates to a fabric treatment composition comprising from 0.0001 to 0.1 wt% of a fabric shading dye and from 0.0001 to 10 wt% of an optical brightener as defined below having a ClogP from 1 to 50. The invention also comprises a method of treating a textile, the method comprising the steps of: (i) treating a textile with an aqueous solution comprising from 1ppb to 10ppm of a fabric shading dye and 1ppb to 50ppm of an optical brightener as defined below having ClogP from 1 to 50; and (ii) rinsing and drying the textile. Preferably the aqueous solution also comprises from 0.2 g/L to 5 or 3 g/L of a surfactant. It is preferred that the aqueous solution has an ionic strength from 0.001 to 0.5. It is preferred that the fabric shading dye is present in the range 10 ppb to 200 ppb. In a preferred method the textile is treated at a temperature of 30°C or below, or 25°C or below.

The textile may comprise cotton, or synthetics such as nylon, polyester, Lycra™, wool and/or silk. The textiles may comprise single fibres or mixtures thereof such as polycotton.

The fabric treatment composition may be a detergent composition or a rinse-added composition. Preferably the fabric treatment composition comprises a liquid. It may be pre-treatment composition for use before a laundering or rinsing step, or it may be for addition to water to provide an aqueous solution/wash liquor provided by mixing a detergent composition with water. The detergent composition is preferably in the form of a single or multi-compartment unit dose detergent.

Without wishing to be bound by theory, the defined optical brightener essential to the present invention appears to deposit in particular where the hueing dye has deposited, thus further enhancing fabric whiteness and mitigating any over-hueing effect.

### DETAILED DESCRIPTION OF THE INVENTION

### Definitions

As used herein, the term "alkoxy" is intended to include C1-C8 alkoxy and alkoxy derivatives of polyols having repeating units such as butylene oxide, glycidol oxide, ethylene oxide or propylene oxide.

As used herein, unless otherwise specified, the terms "alkyl" and "alkyl capped" are intended to include C1-C18 alkyl groups, and in one aspect, C1-C6 alkyl groups.

As used herein, unless otherwise specified, the term "aryl" is intended to include C3-12 aryl groups.

As used herein, unless otherwise specified, the term "arylalkyl" and "alkaryl" are equivalent and are each intended to include groups comprising an alkyl moiety bound to an aromatic moiety, typically having C1-C18 alkyl groups and, in one aspect, C1-C6 alkyl groups.

The terms "ethylene oxide," "propylene oxide" and "butylene oxide" may be shown herein by their typical designation of "EO," "PO" and "BO," respectively.

As used herein, the term "detergent composition" includes, unless otherwise indicated, granular, powder, liquid, gel, paste, unit dose, bar form and/or flake type washing agents and/or fabric treatment compositions, including but not limited to products for laundering fabrics, fabric softening compositions, fabric enhancing compositions, fabric freshening compositions, and other products for the care and maintenance of fabrics, and combinations thereof. Such compositions may be pre-treatment compositions for use prior to a washing step or may be rinse added compositions, as well as cleaning auxiliaries, such as bleach additives and/or "stain-stick" or pre-treat compositions or substrate-laden products such as dryer added sheets.

As used herein, "cellulosic substrates" are intended to include any substrate which comprises at least a majority by weight of cellulose. Cellulose may be found in wood, cotton, linen, jute, and hemp. Cellulosic substrates may be in the form of powders, fibers, pulp and articles formed from powders, fibers and pulp. Cellulosic fibers, include, without limitation, cotton, rayon (regenerated cellulose), acetate (cellulose acetate), triacetate (cellulose triacetate), and mixtures thereof. Articles formed from cellulosic fibers include textile articles such as fabrics. Articles formed from pulp include paper.

As used herein, the term "maximum extinction coefficient" is intended to describe the molar extinction coefficient at the wavelength of maximum absorption (also referred to herein as the maximum wavelength), in the range of 400 nanometers to 750 nanometers.

As used herein "average molecular weight" is reported as an average molecular weight, as determined by its molecular weight distribution: as a consequence of their manufacturing process, polymers disclosed herein may contain a distribution of repeating units in their polymeric moiety.

As used herein, articles such as "a" and "an" when used in a claim, are understood to mean one or more of what is claimed or described.

As used herein, the terms "include/s"and "including" are meant to be non-limiting.

As used herein, the term "solid" includes granular, powder, bar and tablet product forms.

As used herein, the term "fluid" includes liquid, gel, paste and gas product forms.

Unless otherwise noted, all component or composition levels are in reference to the active portion of that component or composition, and are exclusive of impurities, for example, residual solvents, un-reacted starting materials, or by-products, which may be present in commercially available sources of such components or compositions.

All percentages and ratios are calculated by weight unless otherwise indicated. All percentages and ratios are calculated based on the total composition unless otherwise indicated.

### The Optical Brightener

The optical brightener has a ClogP of 1 to 50 (herein, high ClogP), or 2 to 50, or 2.5 to 50, or 3 to 50 or up to 40 or 30 or 20 or up to 10. ClogP is calculated using Advanced Chemistry Development Software V11.02 (© 1994-2012 ACD/Labs), Advanced Chemistry Development, Inc., 8 King Street East, Suite 107, Toronto, Ontario, Canada M5C 1B5. The optical brightener preferably has an extinction co-efficient at the maximum absorbance between 400 and 750nm of less than 1000L/mol cm.

The optical brightener is a coumarinic brightener selected from compounds of Formula I 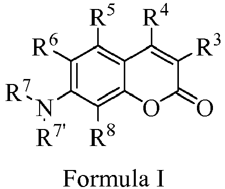 wherein R³ is selected from the group consisting of H, C1-C4 alkyl, and C6-C10 aromatic or heteroaromatic groups which may be substituted with -F, -Cl, -Br, phenyl and C1-C4 alkyl; R⁴ is selected from the group consisting of H, C1-C4 alkyl optionally substituted by OH or (OCH₂CHR⁹)ₓOH wherein each R⁹ is independently selected from H, methyl, and ethyl and x is 1 to 20; R⁵ is H, R⁶ and R⁸ are selected from H and C2-C4 alkylene that combine with one of more of R⁷ and R^{7'} to form a heterocyclic ring; R⁷ and R^{7'} are selected from the group consisting of H and organic groups that have mass less than 350 Daltons, wherein R⁷ and R^{7'} may combine with one another to form a heterocyclic ring; and wherein the weight of the brightener is from 160 to no more than 1400 Daltons, and mixtures thereof. Preferred optical brightener for use in the present invention may be selected from compounds of Formula I 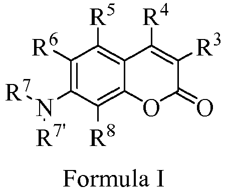 wherein R³ is selected from the group consisting of H, methyl, phenyl optionally substituted with -Cl or C1-C4 alkyl, preferably methyl, triazole optionally substituted with phenyl or C1 - C4 alkyl, and pyrazole optionally substituted with phenyl; R⁴ is selected from the group consisting of H, methyl and ethyl optionally substituted by OH or (OCH₂CHR⁹)ₓ OH wherein each R⁹ is independently selected from H and methyl, and x is 1 to 10; R⁵ ,R⁶ and R⁸ are H; R⁷ and R^{7'} are selected from the group consisting of H and organic groups that have mass less than 350 Daltons, wherein R⁷ and R^{7'} may combine with one another to form a heterocyclic ring, and mixtures thereof.

A preferred optical brightener for use in the present invention may be selected from compounds of Formula I 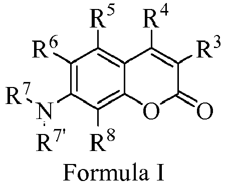 wherein R³ is selected from the group consisting of H, methyl, and phenyl; R⁴ is selected from the group consisting of H and methyl; R⁵ ,R⁶ and R⁸ are H; R⁷ and R^{7'} are selected from the group consisting of H, C1-C12 branched or unbranched alkyl, and (CH₂CHR⁹O)ₓH where each R⁹ is independently selected from H, methyl, and ethyl and x is 1 to 20, and mixtures thereof.

Typically the optical brightener is present in the composition in an amount from 1ppb to 10 wt% of the composition. The composition may be a pre-treatmenet composition for applying directly to an oily stain prior to an aqueous wash or rinse step or it may be provided by combining a detergent composition with water to form a wash liquor. Thus the concentration may vary widely depending on the form of application. Thus the optical brightener may be present in amounts from 1ppb to 50ppm in a wash liquor/solution, preferably from 100ppb or 500ppb to 35ppm. In a pre-treat composition or detergent composition for dilution, more usually in an amount from 0.00001 to 10 wt%, or from 0.0001 or 0.01 or even from 0.05 to 5 or 2 wt% of the pre-treat or detergent composition.

The optical brightener may be incorporated into the detergent composition by first forming a pre-mix comprising the optical brightener, for example where the pre-mix comprises a particle or concentrated liquid for incorporation into the composition, it may be preferred that the optical brightener is present at a level of from 0.001 or even 0.01 to 10 wt% of the pre-mix.

Examples of preferred brighteners are shown in Table 1.

**Table 1: Optical brighteners**

| No. | Formula |
|---|---|
| Example 1 | 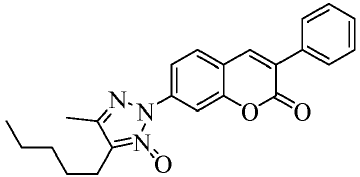 |
| | 7-(4-methyl-1-oxido-5-pentyl-2H-1,2,3-triazol-2-yl)-3-phenyl-2H-1-benzopyran-2-one |
| Example 2 | 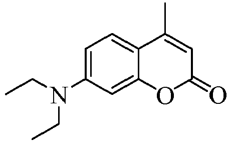 |
| | 7-(diethylamino)-4-methyl-2H-1-benzopyran-2-one |
| Example 3 | 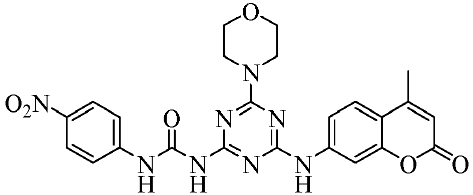 |
| | N-[4-[(4-methyl-2-oxo-2H-1-benzopyran-7-yl)amino]-6-(4-morpholinyl)-1,3,5-triazin-2-yl]-N'-(4-nitrophenyl)urea |

**Fabric Shading dyes.** The composition comprises a fabric shading dye (sometimes referred to as hueing, bluing or whitening agents), or mixture of fabric shading dyes. Typically the shading dye provides a blue or violet shade to fabric. Shading dyes can be used either alone or in combination to create a specific shade of hueing and/or to shade different fabric types. This may be provided for example by mixing a red and green-blue dye to yield a blue or violet shade. Shading dyes may be selected from any known chemical class of dye, including but not limited to acridine, anthraquinone (including polycyclic quinones), azine, azo (e.g., monoazo, disazo, trisazo, tetrakisazo, polyazo), including premetallized azo, benzodifurane and benzodifuranone, carotenoid, coumarin, cyanine, diazahemicyanine, diphenylmethane, formazan, hemicyanine, indigoids, methane, naphthalimides, naphthoquinone, nitro and nitroso, oxazine, phthalocyanine, pyrazoles, stilbene, styryl, triarylmethane, triphenylmethane, xanthenes and mixtures thereof. Mono-azo, di-azo, azine, triarylmethane and anthraqunone dyes are particularly preferred.

Suitable dyes include small molecule dyes and polymeric dyes. Suitable small molecule dyes include small molecule dyes selected from the group consisting of dyes falling into the Colour Index (C.I.) classifications of Acid, Direct, Basic, Reactive, Solvent or Disperse dyes for example that are classified as Blue, Violet, Red, Green or Black, and provide the desired shade either alone or in combination. Dyes described as hydrolysed Reactive dyes are also suitable, for example as described in EP1794274. In another aspect, suitable small molecule dyes include small molecule dyes selected from the group consisting of Colour Index (Society of Dyers and Colourists, Bradford, UK) numbers Direct Violet dyes such as 9, 35, 48, 51, 66, and 99, Direct Blue dyes such as 1, 71, 80 and 279, Acid Red dyes such as 17, 73, 52, 88 and 150, Acid Violet dyes such as 15, 17, 24, 43, 49 and 50, Acid Blue dyes such as 15, 17, 25, 29, 40, 45, 48, 75, 80, 83, 90 and 113, Acid Black dyes such as 1, Basic Violet dyes such as 1, 3, 4, 10 and 35, Basic Blue dyes such as 3, 16, 22, 47, 66, 75 and 159, Disperse or Solvent dyes such as those described in US 2008/034511 A1 or US 8,268,016 B2, or dyes as disclosed in US 7,208,459 B2, such as solvent violet 13 and mixtures thereof. In another aspect, suitable small molecule dyes include small molecule dyes selected from the group consisting of C. I. numbers acid violet 17, acid blue 80, acid violet 50, direct blue 71, direct violet 51, direct blue 1, acid red 88, acid red 150, acid blue 29, acid blue 113 or mixtures thereof. Of the small molecule dyes, acid violet dyes may be preferred.

Polymeric dyes are preferred. Suitable polymeric dyes include polymeric dyes selected from the group consisting of polymers containing covalently bound (sometimes referred to as conjugated) chromogens, (dye-polymer conjugates), for example polymers with chromogens copolymerized into the backbone of the polymer and mixtures thereof. Polymeric dyes include those described in WO2011/98355, US 2012/225803 A1, US 2012/090102 A1, WO2012/166768, US 7,686,892 B2, and WO2010/142503.

In another aspect, suitable polymeric dyes include polymeric dyes selected from the group consisting of fabric-substantive colorants sold under the name of Liquitint® (Milliken, Spartanburg, South Carolina, USA), dye-polymer conjugates formed from at least one reactive dye and a polymer selected from the group consisting of polymers comprising a moiety selected from the group consisting of a hydroxyl moiety, a primary amine moiety, a secondary amine moiety, a thiol moiety and mixtures thereof. In still another aspect, suitable polymeric dyes include polymeric dyes selected from the group consisting of Liquitint® Violet CT, carboxymethyl cellulose (CMC) covalently bound to a reactive blue, reactive violet or reactive red dye such as CMC conjugated with C.I. Reactive Blue 19, sold by Megazyme, Wicklow, Ireland under the product name AZO-CM-CELLULOSE, product code S-ACMC, alkoxylated triphenyl-methane polymeric colourants, alkoxylated thiophene polymeric colourants, and mixtures thereof. Suitable polymeric dyes are also described in EP2534206, WO2012/163871, WO2012/130492, WO2012/126665, WO2012/119859, US2012/0225803, IN201200902, EP2488622, WO2012/098046, EP2440645, WO2010/145887, WO2011/098355, WO2011/098356, WO2011/082840, WO2011/047987, WO2011/148624 and WO2010/102861.Preferred hueing dyes include the whitening agents found in WO 08/87497 A1, WO2011/011799 and US 2012/129752 A1. Preferred shading dyes for use in the present invention may be the preferred dyes disclosed in these references, including those selected from Examples 1-42 in Table 5 of WO2011/011799. Other preferred dyes are disclosed in US 8,138,222. Other preferred dyes are disclosed in US 7,909,890 B2.

Preferred dyes include dye polymers, wherein a dye group is bound to a polymeric group, optionally via a linking group. Suitable polymeric groups include, but are not limited to (1) alkoxylated polyethyleneimine (for example as disclosed in WO2012119859), (2) polyvinyl alcohol (for example as disclosed in WO2012130492), or (3) diamine derivative of an alkylene oxide capped polyethylene glycol (for example as disclosed in WO2012126665, especially figure 24), or polyalkoxylated alcohol, for example as described in WO2011/011799, WO2012/054058, WO2012/166699 or WO2012/166768. One suitable class of dye polymers may be obtained by reacting a blue or violet dye containing an NH2 group with a polymer to form a covalent bond via the reacted NH2 group of the blue or violet dye and the dye polymer has an average of from 2 to 30, preferably 2 to 20, most preferably 2 to 15 repeating same units. In a preferred embodiment the monomeric units are selected from alkylene oxides, preferably ethylene oxides. Typically dye polymers will be in the form of a mixture of dye polymers in which there is a mixture of molecules having a distribution of number of monomer groups in the polymer chains, such as the mixture directly produced by the appropriate organic synthesis route, for example in the case of alkylene oxide polymers, the result of an alkoxylation reaction. Such dye polymers are typically blue or violet in colour, to give to the cloth a hue angle of 230 to 345, more preferably 250 to 330, most preferably 270 to 300, either alone or in combination with other shading dyes that may be present. In the synthesis of dye polymers unbound blue or violet organic dyes may be present in a mixture with the final dye-polymer product. The chromophore of the blue or violet dye is preferably selected from the group consisting of: azo; anthraquinone; phthalocyanine; triphendioxazine; and, triphenylmethane. The dye polymer may be obtained by reacting a dye containing an NH or an NH2 group (herein referred to as NH[2]) with a polymer or suitable monomer that forms a polymer in situ. Preferably the NH[2] is covalently bound to an aromatic ring of the dye. Unbound dye is formed when the dye does not react with polymer, or even when a bound dye hydrolyzes from a polymer. Preferred dyes containing NH[2] groups for such reactions are selected from: acid violet 1 ; acid violet 3; acid violet 6; acid violet 11 ; acid violet 13; acid violet 14; acid violet 19; acid violet 20; acid violet 36; acid violet 36:1 ; acid violet 41 ; acid violet 42; acid violet 43; acid violet 50; acid violet 51 ; acid violet 63; acid violet 48; acid blue 25; acid blue 40; acid blue 40:1; acid blue 41 ; acid blue 45; acid blue 47; acid blue 49; acid blue 51 ; acid blue 53; acid blue 56; acid blue 61 ; acid blue 61 :1 ; acid blue 62; acid blue 69; acid blue 78; acid blue 81 :1 ; acid blue 92; acid blue 96; acid blue 108; acid blue 111; acid blue 215; acid blue 230; acid blue 277; acid blue 344; acid blue 1 17; acid blue 124; acid blue 129; acid blue 129:1 ; acid blue 138; acid blue 145; direct violet 99; direct violet 5; direct violet 72; direct violet 16; direct violet 78; direct violet 9, direct violet 77; direct violet 83; food black 2; direct blue 33; direct blue 41 ; direct blue 22; direct blue 71 ; direct blue 72; direct blue 74; direct blue 75; direct blue 82; direct blue 96; direct blue 110; direct blue 111 ; direct blue 120; direct blue 120:1 ; direct blue 121 ; direct blue 122; direct blue 123; direct blue 124; direct blue 126; direct blue 127; direct blue 128; direct blue 129; direct blue 130; direct blue 132; direct blue 133; direct blue 135; direct blue 138; direct blue 140; direct blue 145; direct blue 148; direct blue 149; direct blue 159; direct blue 162; direct blue 163; food black 2; food black 1 wherein the acid amide group is replaced by NH[2]; basic violet 2; basic violet 5; basic violet 12; basic violet 14; basic violet 8; basic blue 12; basic blue 16; basic blue 17; basic blue 47; basic blue 99; disperse blue 1 ; disperse blue 5; disperse blue 6; disperse blue 9; disperse blue 1 1 ; disperse blue 19; disperse blue 20; disperse blue 28; disperse blue 40; disperse blue 56; disperse blue 60; disperse blue 81 ; disperse blue 83; disperse blue 87; disperse blue 104; disperse blue 1 18; disperse violet 1 ; disperse violet 4, disperse violet 8, disperse violet 17, disperse violet 26; disperse violet 28; solvent violet 26; solvent blue 12; solvent blue 13; solvent blue 18; solvent blue 68. Preferred dyes are selected from polymeric mono or di- azo dyes. Polymeric azo dyes such as mono-azo dyes which contain a phenyl group directly attached to the azo group, wherein the phenyl group has an NH[2] group covalently bound to it, for example a mono azo thiophene polymeric dye may be preferred. The polymer chain is preferably selected from polyalkylene oxides. Examples of polyoxyalkylene oxide chains include ethylene oxide, propylene oxide, glycidol oxide, butylene oxide and mixtures thereof. The polymer chain and/or the dye chromophore group may optionally carry anionic or cationic groups.

The shading dye may be incorporated into the detergent composition as part of a reaction mixture which is the result of the organic synthesis for a dye molecule, with optional purification step(s). Such reaction mixtures generally comprise the dye molecule itself and in addition may comprise un-reacted starting materials and/or by-products of the organic synthesis route. Suitable polymeric shading dyes are illustrated below. As with all such alkoxylated compounds, the organic synthesis may produce a mixture of molecules having different degrees of alkoxylation. Such mixtures may be used directly to provide the shading dye, or may undergo a purification step.

The shading dye may have the following structure: 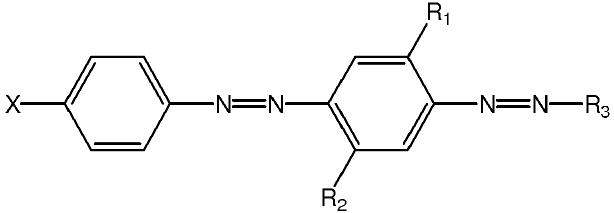 wherein:
R₁ and R₂ are independently selected from the group consisting of: H; alkyl; alkoxy; alkyleneoxy; alkyl capped alkyleneoxy; urea; and amido;
R₃ is a substituted aryl group;
X is a substituted group comprising sulfonamide moiety and optionally an alkyl and/or aryl moiety, and wherein the substituent group comprises at least one alkyleneoxy chain that comprises at least four alkyleneoxy moieties. The hueing dye may be a thiophene dye such as a thiophene azo dye, preferably alkoxylated and preferably substituted with at least one solubilising group selected from sulphonic, carboxylic or quaternary ammonium group.
Examples of preferred shading dyes are: 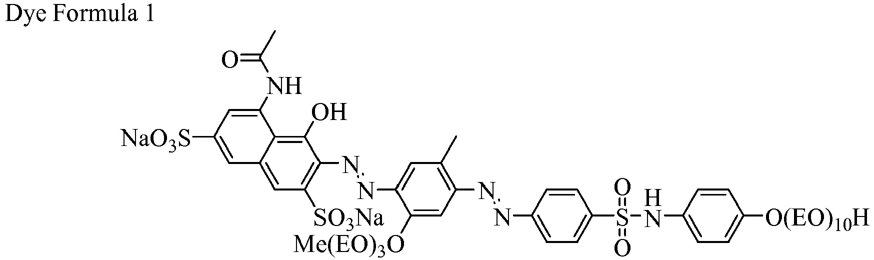 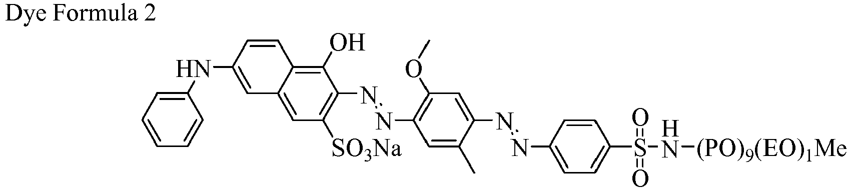 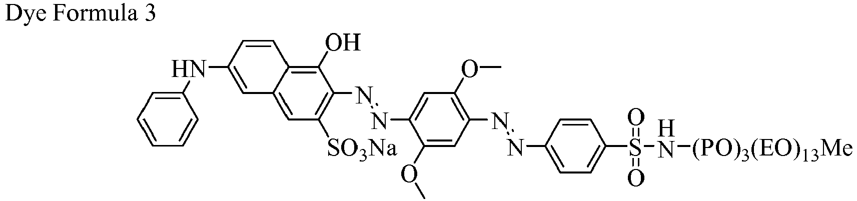 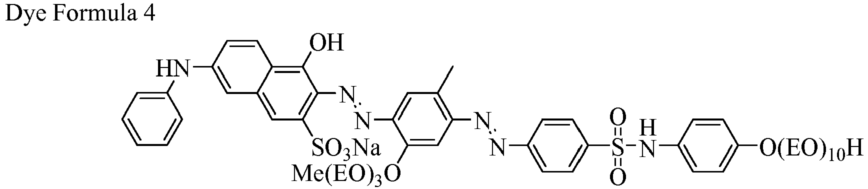 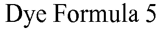 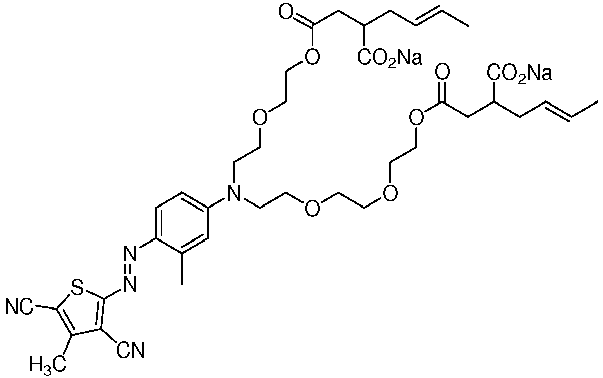 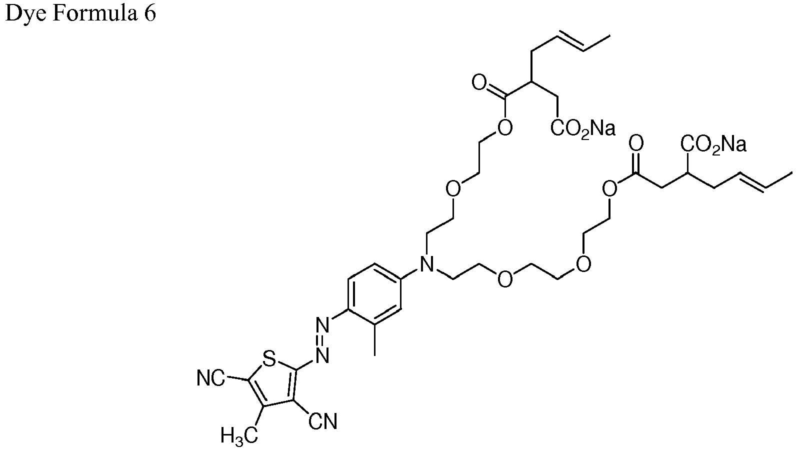 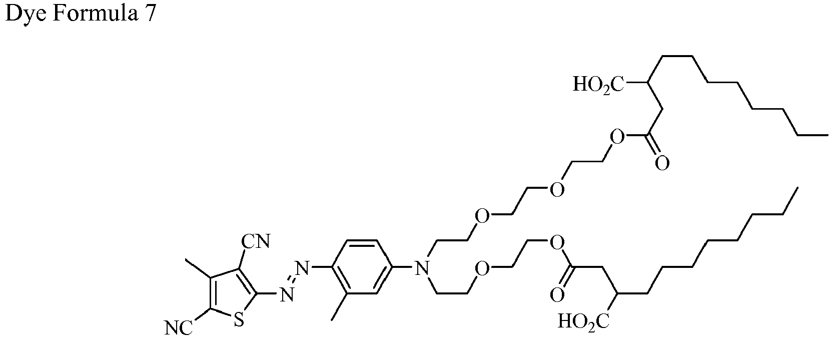 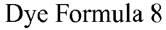 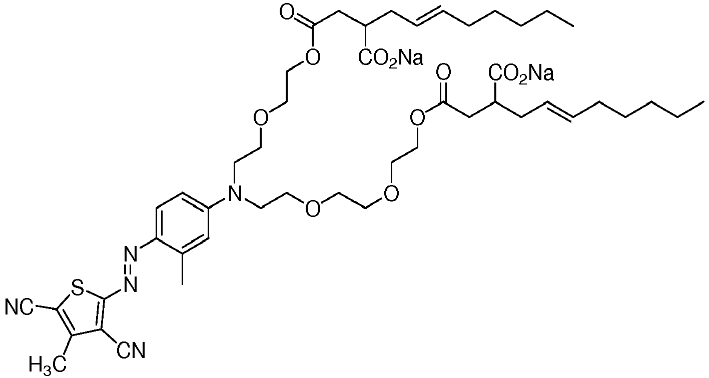 The shading dye may comprise
a) a Zn-, Ca-, Mg-, Na-, K-, Al, Si-, Ti-, Ge-, Ga-, Zr-, In- or Sn- phthalocyanine compound of formula (1)

   (PC)-L-(D) (1)

   to which at least one mono-azo dyestuff is attached through a covalent bonding via a linking group L wherein
   PC is a metal-containing phthalocyanine ring system;
   D is the radical of a mono-azo dyestuff; and
   L is a group 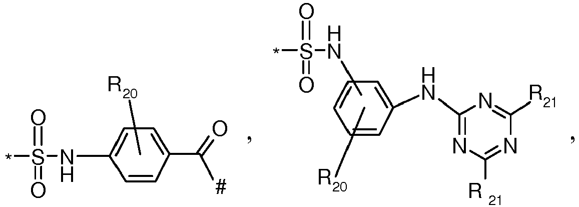 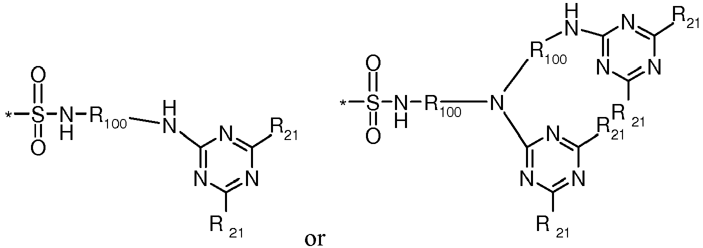 wherein
      R₂₀ is hydrogen, Ci- Csalkyl, Ci-Csalkoxy or halogen;
      R₂₁ is independently D, hydrogen, OH, Cl or F, with the proviso that at least one is D;
      R₁₀₀ is Ci-Csalkylene
      * is the point of attachment of PC;
      # is the point of attachment of the dye.

Suitable dye clay conjugates include dye clay conjugates selected from the group comprising at least one cationic/basic dye and a smectite clay, and mixtures thereof. In another aspect, suitable dye clay conjugates include dye clay conjugates selected from the group consisting of one cationic/basic dye selected from the group consisting of C.I. Basic Yellow 1 through 108, C.I. Basic Orange 1 through 69, C.I. Basic Red 1 through 118, C.I. Basic Violet 1 through 51, C.I. Basic Blue 1 through 164, C.I. Basic Green 1 through 14, C.I. Basic Brown 1 through 23, CI Basic Black 1 through 11, and a clay selected from the group consisting of Montmorillonite clay, Hectorite clay, Saponite clay and mixtures thereof. In still another aspect, suitable dye clay conjugates include dye clay conjugates selected from the group consisting of: Montmorillonite Basic Blue B7 C.I. 42595 conjugate, Montmorillonite Basic Blue B9 C.I. 52015 conjugate, Montmorillonite Basic Violet V3 C.I. 42555 conjugate, Montmorillonite Basic Green G1 C.I. 42040 conjugate, Montmorillonite Basic Red R1 C.I. 45160 conjugate, Montmorillonite C.I. Basic Black 2 conjugate, Hectorite Basic Blue B7 C.I. 42595 conjugate, Hectorite Basic Blue B9 C.I. 52015 conjugate, Hectorite Basic Violet V3 C.I. 42555 conjugate, Hectorite Basic Green G1 C.I. 42040 conjugate, Hectorite Basic Red R1 C.I. 45160 conjugate, Hectorite C.I. Basic Black 2 conjugate, Saponite Basic Blue B7 C.I. 42595 conjugate, Saponite Basic Blue B9 C.I. 52015 conjugate, Saponite Basic Violet V3 C.I. 42555 conjugate, Saponite Basic Green G1 C.I. 42040 conjugate, Saponite Basic Red R1 C.I. 45160 conjugate, Saponite C.I. Basic Black 2 conjugate and mixtures thereof.

The aforementioned fabric shading dyes can be used in combination (any mixture of fabric shading dyes can be used).

Pigments may also be incorporated into the fabric treatment compositions of the invention. Suitable pigments include pigments selected from the group consisting of flavanthrone, indanthrone, chlorinated indanthrone containing from 1 to 4 chlorine atoms, pyranthrone, dichloropyranthrone, monobromodichloropyranthrone, dibromodichloropyranthrone, tetrabromopyranthrone, perylene-3,4,9,10-tetracarboxylic acid diimide, wherein the imide groups may be unsubstituted or substituted by C1-C3 -alkyl or a phenyl or heterocyclic radical, and wherein the phenyl and heterocyclic radicals may additionally carry substituents which do not confer solubility in water, anthrapyrimidinecarboxylic acid amides, violanthrone, isoviolanthrone, dioxazine pigments, copper phthalocyanine which may contain up to 2 chlorine atoms per molecule, polychloro-copper phthalocyanine or polybromochloro-copper phthalocyanine containing up to 14 bromine atoms per molecule and mixtures thereof. Other suitable pigments are described in WO2008/090091. In another aspect, suitable pigments include pigments selected from the group consisting of Ultramarine Blue (C.I. Pigment Blue 29), Ultramarine Violet (C.I. Pigment Violet 15), Monastral Blue and mixtures thereof. Particularly preferred are Pigment Blues 15 to 20, especially Pigment Blue 15 and/or 16. Other suitable pigments include those selected from the group consisting of Ultramarine Blue (C.I. Pigment Blue 29), Ultramarine Violet (C.I. Pigment Violet 15), Monastral Blue and mixtures thereof. Suitable shading dyes are described in more detail in US 7,208,459 B2.

The problem of over-hueing may be particularly acute for dyes having a high affinity to synthetic fabrics. Thus the present invention may be particularly useful for treating polyester and/or nylon and mixed fibres containing these components, such as polycotton. They may be particularly useful for use in combination with dyes having an affinity for synthetic fabrics, for example disperse or solvent dyes and polymeric dyes. The compositions of the present invention may also be particularly useful for use in combination with dyes having high affinity for cotton such as Direct dyes as they can help generating an even hue and consistent whiteness across a range of fabric types.

The aforementioned fabric shading dyes can be used in mixtures of shading dyes and/or in mixtures with any pigment.

The composition may optionally comprise alkyl phthalimides. A preferred alkylphthalimide is N-butyl phthalimide. When present the alkylphthalimide is preferably present in an amount from 0.0001g/l to 5g/l or 0.001 to 1g/l or even 0.01 to 5g/l, based on the composition, or from 1ppb or 100ppb or 500ppb to 500ppm, or based on the aqueous textile treatment liquor.

The compositions of the invention typically have a pH greater than 5, or even greater than 6 or 7.5 or 8 when measured in deionised water at a concentration of 1wt%. In order to adjust pH suitable pH modifiers may be incorporated such as acids and bases. Preferred examples are citric acid, sodium carbonate and sodium silicate or mixtures thereof. Preferably the reserve alkalinity of the compositions in deionised water at a concentration of 1wt% will also be at least 4 or at least 5.

The compositions of the invention may optionally comprise cationic surfactant though preferably at relatively low levels. Where cationic surfactant is present, the weight ratio of optical brightener to cationic surfactant is up to 1:1, if the total cationic surfactant is greater than 2 wt% based on the composition.

The compositions of the invention comprise an enzyme, preferably protease, amylase and/or lipase.

### Detergent Adjunct Materials

The detergent compositions of the invention may additionally comprise optional detergent adjunct materials. Suitable adjuncts may be, for example to assist or enhance cleaning performance, for treatment of the substrate to be cleaned, for example by softening or freshening, or to modify the aesthetics of the detergent composition as is the case with perfumes, colorants or non-fabric shading dyes. Suitable adjunct materials include, but are not limited to, surfactants, builders, chelating agents, dispersants, enzymes, and enzyme stabilizers, catalytic materials, bleach activators, hydrogen peroxide, sources of hydrogen peroxide, preformed peracids, polymeric dispersing agents, clay soil removal/anti-redeposition agents, additional brighteners, suds suppressors, dyes, hueing dyes, perfumes, perfume delivery systems, structure elasticizing agents, fabric softeners, carriers, hydrotropes, processing aids, solvents, additional dyes and/or pigments, some of which are discussed in more detail below. In addition to the disclosure below, suitable examples of such other adjuncts and levels of use are found in U.S. Patent Nos. 5,576,282, 6,306,812 B1 and 6,326,348 B1.

**Encapsulates.** The detergent composition may comprise an encapsulate. In one aspect, an encapsulate comprising a core, a shell having an inner and outer surface, said shell encapsulating said core. The core may comprise any laundry care adjunct, though typically the core may comprise material selected from the group consisting of perfumes; brighteners; dyes; insect repellants; silicones; waxes; flavors; vitamins; fabric softening agents; skin care agents in one aspect, paraffins; enzymes; anti-bacterial agents; bleaches; sensates; and mixtures thereof; and said shell may comprise a material selected from the group consisting of polyethylenes; polyamides; polyvinylalcohols, optionally containing other co-monomers; polystyrenes; polyisoprenes; polycarbonates; polyesters; polyacrylates; aminoplasts, in one aspect said aminoplast may comprise a polyureas, polyurethane, and/or polyureaurethane, in one aspect said polyurea may comprise polyoxymethyleneurea and/or melamine formaldehyde; polyolefins; polysaccharides, in one aspect said polysaccharide may comprise alginate and/or chitosan; gelatin; shellac; epoxy resins; vinyl polymers; water insoluble inorganics; silicone; and mixtures thereof. Preferred encapsulates comprise perfume. Preferred encapsulates comprise a shell which may comprise melamine formaldehyde and/or cross linked melamine formaldehyde. Preferred encapsulates comprise a core material and a shell, said shell at least partially surrounding said core material, is disclosed. At least 75%, 85% or even 90% of said encapsulates may have a fracture strength of from 0.2 MPa to 10 MPa, and a benefit agent leakage of from 0% to 20%, or even less than 10% or 5% based on total initial encapsulated benefit agent. Preferred are those in which at least 75%, 85% or even 90% of said encapsulates may have (i) a particle size of from 1 microns to 80 microns, 5 microns to 60 microns, from 10 microns to 50 microns, or even from 15 microns to 40 microns, and/or (ii) at least 75%, 85% or even 90% of said encapsulates may have a particle wall thickness of from 30 nm to 250 nm, from 80 nm to 180 nm, or even from 100 nm to 160 nm. Formaldehyde scavengers may be employed with the encapsulates, for example, in a capsule slurry and/or added to a composition before, during or after the encapsulates are added to such composition. Suitable capsules that can be made by following the teaching of USPA 2008/0305982 A1; and/or USPA 2009/0247449 A1. Alternatively, suitable capsules can be purchased from Appleton Papers Inc. of Appleton, Wisconsin USA.

In a preferred aspect the detergent composition may comprise a deposition aid, preferably in addition to encapsulates. Preferred deposition aids are selected from the group consisting of cationic and nonionic polymers. Suitable polymers include cationic starches, cationic hydroxyethylcellulose, polyvinylformaldehyde, locust bean gum, mannans, xyloglucans, tamarind gum, polyethyleneterephthalate and polymers containing dimethylaminoethyl methacrylate, optionally with one or more monomers selected from the group comprising acrylic acid and acrylamide.

**Perfume.** Preferred compositions of the invention comprise perfume. Typically the composition comprises a perfume that comprises one or more perfume raw materials, selected from the group as described in WO08/87497. However, any perfume useful in a detergent may be used. A preferred method of incorporating perfume into the compositions of the invention is via an encapsulated perfume particle comprising either a water-soluble hydroxylic compound or melamine-formaldehyde or modified polyvinyl alcohol. In one aspect the encapsulate comprises (a) an at least partially water-soluble solid matrix comprising one or more water-soluble hydroxylic compounds, preferably starch; and (b) a perfume oil encapsulated by the solid matrix. In a further aspect the perfume may be pre-complexed with a polyamine, preferably a polyethylenimine so as to form a Schiff base.

**Polymers.** The detergent composition may comprise one or more polymers in addition to the DTI which may be polymeric. Examples are optionally modified carboxymethylcellulose, poly (ethylene glycol), poly(vinyl alcohol), polycarboxylates such as polyacrylates, maleic/acrylic acid copolymers and lauryl methacrylate/acrylic acid co-polymers and carboxylate polymers.

Suitable carboxylate polymers include maleate/acrylate random copolymer or polyacrylate homopolymer. The carboxylate polymer may be a polyacrylate homopolymer having a molecular weight of from 4,000 Da to 9,000 Da, or from 6,000 Da to 9,000 Da. Other suitable carboxylate polymers are co-polymers of maleic acid and acrylic acid, and may have a molecular weight in the range of from 4,000 Da to 90,000 Da.

Other suitable carboxylate polymers are co-polymers comprising: (i) from 50 to less than 98 wt% structural units derived from one or more monomers comprising carboxyl groups; (ii) from 1 to less than 49 wt% structural units derived from one or more monomers comprising sulfonate moieties; and (iii) from 1 to 49 wt% structural units derived from one or more types of monomers selected from ether bond-containing monomers represented by formulas (I) and (II): 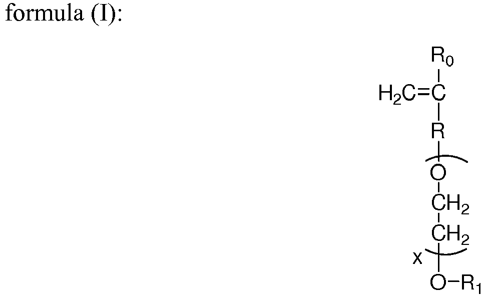 wherein in formula (I), R₀ represents a hydrogen atom or CH₃ group, R represents a CH₂ group, CH₂CH₂ group or single bond, X represents a number 0-5 provided X represents a number 1-5 when R is a single bond, and R₁ is a hydrogen atom or C1 to C20 organic group; 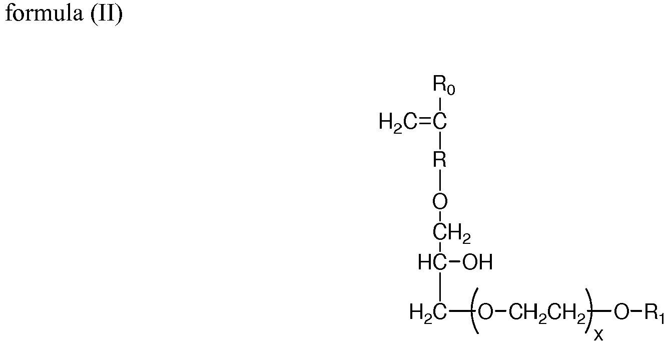 in formula (II), R₀ represents a hydrogen atom or CH₃ group, R represents a CH₂ group, CH₂CH₂ group or single bond, X represents a number 0-5, and R₁ is a hydrogen atom or C1 to C20 organic group.

The composition may comprise one or more amphiphilic cleaning polymers such as the compound having the following general structure: bis((C₂H₅O)(C₂H₄O)n)(CH₃)-N'-CₓH₂ₓ-N⁺-(CH₃)-bis((C₂H₅O)(C₂H₄O)n), wherein n = from 20 to 30, and x = from 3 to 8, or sulphated or sulphonated variants thereof. In one aspect, this polymer is sulphated or sulphonated to provide a zwitterionic soil suspension polymer.

The composition preferably comprises amphiphilic alkoxylated grease cleaning polymers which have balanced hydrophilic and hydrophobic properties such that they remove grease particles from fabrics and surfaces. Preferred amphiphilic alkoxylated grease cleaning polymers comprise a core structure and a plurality of alkoxylate groups attached to that core structure. These may comprise alkoxylated polyalkylenimines, preferably having an inner polyethylene oxide block and an outer polypropylene oxide block. Typically these may be incorporated into the compositions of the invention in amounts of from 0.005 to 10 wt%, generally from 0.5 to 8 wt%.

Alkoxylated polycarboxylates such as those prepared from polyacrylates are useful herein to provide additional grease removal performance. Such materials are described in WO 91/08281 and PCT 90/01815. Chemically, these materials comprise polyacrylates having one ethoxy side-chain per every 7-8 acrylate units. The side-chains are of the formula -(CH₂CH₂O)ₘ(CH₂)ₙCH₃ wherein m is 2-3 and n is 6-12. The side-chains are ester-linked to the polyacrylate "backbone" to provide a "comb" polymer type structure. The molecular weight can vary, but is typically in the range of 2000 to 50,000. Such alkoxylated polycarboxylates can comprise from 0.05% to 10%, by weight, of the compositions herein.

The composition may comprise polyethylene glycol polymers and these may be particularly preferred in compositions comprising mixed surfactant systems. Suitable polyethylene glycol polymers include random graft co-polymers comprising: (i) hydrophilic backbone comprising polyethylene glycol; and (ii) hydrophobic side chain(s) selected from the group consisting of: C4-C25 alkyl group, polypropylene, polybutylene, vinyl ester of a saturated C1-C6 mono-carboxylic acid, C1-C6 alkyl ester of acrylic or methacrylic acid, and mixtures thereof. Suitable polyethylene glycol polymers have a polyethylene glycol backbone with random grafted polyvinyl acetate side chains. The average molecular weight of the polyethylene glycol backbone can be in the range of from 2,000 Da to 20,000 Da, or from 4,000 Da to 8,000 Da. The molecular weight ratio of the polyethylene glycol backbone to the polyvinyl acetate side chains can be in the range of from 1:1 to 1:5, or from 1:1.2 to 1:2. The average number of graft sites per ethylene oxide units can be less than 1, or less than 0.8, the average number of graft sites per ethylene oxide units can be in the range of from 0.5 to 0.9, or the average number of graft sites per ethylene oxide units can be in the range of from 0.1 to 0.5, or from 0.2 to 0.4. A suitable polyethylene glycol polymer is Sokalan HP22.

Typically these are incorporated into the compositions of the invention in amounts from 0.005 to 10 wt%, more usually from 0.05 to 8 wt%.

Preferably the composition comprises one or more carboxylate polymer, such as a maleate/acrylate random copolymer or polyacrylate homopolymer. In one aspect, the carboxylate polymer is a polyacrylate homopolymer having a molecular weight of from 4,000 Da to 9,000 Da, or from 6,000 Da to 9,000 Da. Typically these are incorporated into the compositions of the invention in amounts from 0.005 to 10 wt%, or from 0.05 to 8 wt%.

Preferably the composition comprises one or more soil release polymers. Examples include soil release polymers having a structure as defined by one of the following Formulae (VI), (VII) or (VIII):

(VI) -[(OCHR¹-CHR²)ₐ-O-OC-Ar-CO-]_{d}

(VII) -[(OCHR³-CHR⁴)_{b}-O-OC-sAr-CO-]ₑ

(VIII) -[(OCHR⁵-CHR⁶)_{c}-OR⁷]_{f}

wherein:
a, b and c are from 1 to 200;
d, e and f are from 1 to 50;
Ar is a 1,4-substituted phenylene;
sAr is 1,3-substituted phenylene substituted in position 5 with SO₃Me;
Me is Li, K, Mg/2, Ca/2, Al/3, ammonium, mono-, di-, tri-, or tetraalkylammonium wherein the alkyl groups are C₁-C₁₈ alkyl or C₂-C₁₀ hydroxyalkyl, or mixtures thereof;
R¹, R², R³, R⁴, R⁵ and R⁶ are independently selected from H or C₁-C₁₈ n- or iso-alkyl; and
R⁷ is a linear or branched Ci-Cis alkyl, or a linear or branched C₂-C₃₀ alkenyl, or a cycloalkyl group with 5 to 9 carbon atoms, or a C₈-C₃₀ aryl group, or a C₆-C₃₀ arylalkyl group.

Suitable soil release polymers are polyester soil release polymers such as Repel-o-tex polymers, including Repel-o-tex SF, SF-2 and SRP6 supplied by Rhodia. Other suitable soil release polymers include Texcare polymers, including Texcare SRA100, SRA300, SRN100, SRN170, SRN240, SRN300 and SRN325 supplied by Clariant. Other suitable soil release polymers are Marloquest polymers, such as Marloquest SL supplied by Sasol.

Preferably the composition comprises one or more cellulosic polymer, including those selected from alkyl cellulose, alkyl alkoxyalkyl cellulose, carboxyalkyl cellulose, alkyl carboxyalkyl cellulose. Preferred cellulosic polymers are selected from the group comprising carboxymethyl cellulose, methyl cellulose, methyl hydroxyethyl cellulose, methyl carboxymethyl cellulose, and mixures thereof. In one aspect, the carboxymethyl cellulose has a degree of carboxymethyl substitution from 0.5 to 0.9 and a molecular weight from 100,000 Da to 300,000 Da.

**Enzymes.** Preferably the detergent composition comprises one or more enzymes. Preferred enzymes provide cleaning performance and/or fabric care benefits. Examples of suitable enzymes include, but are not limited to, hemicellulases, peroxidases, proteases, cellulases, xylanases, lipases, phospholipases, esterases, cutinases, pectinases, mannanases, pectate lyases, keratinases, reductases, oxidases, phenoloxidases, lipoxygenases, ligninases, pullulanases, tannases, pentosanases, malanases, β-glucanases, arabinosidases, hyaluronidase, chondroitinase, laccase, and amylases, or mixtures thereof. A typical combination is an enzyme cocktail that may comprise, for example, a protease and lipase in conjunction with amylase. When present in the composition, the aforementioned additional enzymes may be present at levels from 0.00001% to 2%, from 0.0001% to 1% or even from 0.001% to 0.5% enzyme protein by weight of the composition.

**Proteases.** Preferably the detergent composition comprises one or more proteases. Suitable proteases include metalloproteases and serine proteases, including neutral or alkaline microbial serine proteases, such as subtilisins (EC 3.4.21.62). Suitable proteases include those of animal, vegetable or microbial origin. In one aspect, such suitable protease may be of microbial origin. The suitable proteases include chemically or genetically modified mutants of the aforementioned suitable proteases. In one aspect, the suitable protease may be a serine protease, such as an alkaline microbial protease or/and a trypsin-type protease. Examples of suitable neutral or alkaline proteases include:
(a) subtilisins (EC 3.4.21.62), including those derived from *Bacillus,* such as *Bacillus lentus, B. alkalophilus, B. subtilis, B. amyloliquefaciens, Bacillus pumilus* and *Bacillus gibsonii* described in US 6,312,936 B1, US 5,679,630, US 4,760,025, US7,262,042 and WO09/021867.
(b) trypsin-type or chymotrypsin-type proteases, such as trypsin (*e.g.,* of porcine or bovine origin), including the *Fusarium* protease described in WO 89/06270 and the chymotrypsin proteases derived from *Cellumonas* described in WO 05/052161 and WO 05/052146.
(c) metalloproteases, including those derived from *Bacillus amyloliquefaciens* described in WO 07/044993A2.

Preferred proteases include those derived from *Bacillus gibsonii* or *Bacillus Lentus.*

Suitable commercially available protease enzymes include those sold under the trade names Alcalase®, Savinase®, Primase®, Durazym®, Polarzyme®, Kannase®, Liquanase®, Liquanase Ultra®, Savinase Ultra®, Ovozyme®, Neutrase®, Everlase® and Esperase® by Novozymes A/S (Denmark), those sold under the tradename Maxatase®, Maxacal®, Maxapem®, Properase®, Purafect®, Purafect Prime®, Purafect Ox®, FN3®, FN4®, Excellase® and Purafect OXP® by Genencor International, those sold under the tradename Opticlean® and Optimase® by Solvay Enzymes, those available from Henkel/ Kemira, namely BLAP (sequence shown in Figure 29 of US 5,352,604 with the following mutations S99D + S101 R + S103A + V104I + G159S, hereinafter referred to as BLAP), BLAP R (BLAP with S3T + V4I + V199M + V205I + L217D), BLAP X (BLAP with S3T + V4I + V205I) and BLAP F49 (BLAP with S3T + V4I + A194P + V199M + V205I + L217D) - all from Henkel/Kemira; and KAP (*Bacillus alkalophilus subtilisin* with mutations A230V + S256G + S259N) from Kao, or as disclosed in WO2009/149144, WO2009/149145, WO2010/56653, WO2010/56640, WO2011/072117, US2011/0237487, WO2011/140316 or WO2012/151480.

**Amylases.** Preferably the detergent composition may comprise an amylase. Suitable alpha-amylases include those of bacterial or fungal origin. Chemically or genetically modified mutants (variants) are included. A preferred alkaline alpha-amylase is derived from a strain of *Bacillus,* such as *Bacillus licheniformis, Bacillus amyloliquefaciens, Bacillus stearothermophilus, Bacillus subtilis,* or other *Bacillus sp.,* such as *Bacillus sp.* NCIB 12289, NCIB 12512, NCIB 12513, DSM 9375 (USP 7,153,818) DSM 12368, DSMZ no. 12649, KSM AP1378 (WO 97/00324), KSM K36 or KSM K38 (EP 1,022,334). Preferred amylases include:
(a) the variants described in WO 94/02597, WO 94/18314, WO96/23874 and WO 97/43424, especially the variants with substitutions in one or more of the following positions versus the enzyme listed as SEQ ID No. 2 in WO 96/23874: 15, 23, 105, 106, 124, 128, 133, 154, 156, 181 , 188, 190, 197, 202, 208, 209, 243, 264, 304, 305, 391, 408, and 444.
(b) the variants described in USP 5,856,164 and WO99/23211, WO 96/23873, WO00/60060 and WO 06/002643, especially the variants with one or more substitutions in the following positions versus the AA560 enzyme listed as SEQ ID No. 12 in WO 06/002643:
   26, 30, 33, 82, 37, 106, 118, 128, 133, 149, 150, 160, 178, 182, 186, 193, 203, 214, 231, 256, 257, 258, 269, 270, 272, 283, 295, 296, 298, 299, 303, 304, 305, 311, 314, 315, 318, 319, 339, 345, 361, 378, 383, 419, 421, 437, 441, 444, 445, 446, 447, 450, 461, 471, 482, 484, preferably that also contain the deletions of D183* and G184*.
(c) variants exhibiting at least 90% identity with SEQ ID No. 4 in WO06/002643, the wild-type enzyme from *Bacillus SP722,* especially variants with deletions in the 183 and 184 positions and variants described in WO 00/60060.
(d) variants exhibiting at least 95% identity with the wild-type enzyme from *Bacillus sp*.707 (SEQ ID NO:7 in US 6,093, 562), especially those comprising one or more of the following mutations M202, M208, S255, R172, and/or M261. Preferably said amylase comprises one or more of M202L, M202V, M202S, M202T, M202I, M202Q, M202W, S255N and/or R172Q. Particularly preferred are those comprising the M202L or M202T mutations.
(e) variants described in WO 09/149130, preferably those exhibiting at least 90% identity with SEQ ID NO: 1 or SEQ ID NO:2 in WO 09/149130, the wild-type enzyme from *Geobacillus Stearophermophilus* or a truncated version thereof;
(f) variants as described in EP2540825 and EP2357220;(g) variants as described in WO2009100102 and WO2010115028.

Suitable commercially available alpha-amylases include DURAMYL®, LIQUEZYME®, TERMAMYL®, TERMAMYL ULTRA®, NATALASE®, SUPRAMYL®, STAINZYME®, STAINZYME PLUS®, FUNGAMYL® and BAN® (Novozymes A/S, Bagsvaerd, Denmark), KEMZYM® AT 9000 Biozym Biotech Trading GmbH Wehlistrasse 27b A-1200 Wien Austria, RAPIDASE®, PURASTAR®, ENZYSIZE®, OPTISIZE HT PLUS®, POWERASE® and PURASTAR OXAM® (Genencor International Inc., Palo Alto, California) and KAM® (Kao, 14-10 Nihonbashi Kayabacho, 1-chome, Chuo-ku Tokyo 103-8210, Japan). In one aspect, suitable amylases include NATALASE®, STAINZYME® and STAINZYME PLUS® and mixtures thereof.

**Lipases.** Preferably the invention comprises one or more lipases, including "first cycle lipases" such as those described in U.S. Patent 6,939,702 B1 and US PA 2009/0217464. Preferred lipases are first-wash lipases. In one embodiment of the invention the composition comprises a first wash lipase. First wash lipases includes a lipase which is a polypeptide having an amino acid sequence which: (a) has at least 90% identity with the wild-type lipase derived from *Humicola lanuginosa* strain DSM 4109; (b) compared to said wild-type lipase, comprises a substitution of an electrically neutral or negatively charged amino acid at the surface of the three-dimensional structure within 15A of E1 or Q249 with a positively charged amino acid; and (c) comprises a peptide addition at the C-terminal; and/or (d) comprises a peptide addition at the N-terminal and/or (e) meets the following limitations: i) comprises a negative amino acid in position E210 of said wild-type lipase; ii) comprises a negatively charged amino acid in the region corresponding to positions 90-101 of said wild-type lipase; and iii) comprises a neutral or negative amino acid at a position corresponding to N94 or said wild-type lipase and/or has a negative or neutral net electric charge in the region corresponding to positions 90-101 of said wild-type lipase. Preferred are variants of the wild-type lipase from *Thermomyces lanuginosus* comprising one or more of the T231R and N233R mutations. The wild-type sequence is the 269 amino acids (amino acids 23 - 291) of the Swissprot accession number Swiss-Prot O59952 (derived from *Thermomyces lanuginosus (Humicola lanuginosa*)). Preferred lipases would include those sold under the tradenames Lipex® and Lipolex® and Lipoclean®. Other suitable lipases include those described in European Patent Application No. 12001034.3.

**Endoglucanases.** Other preferred enzymes include microbial-derived endoglucanases exhibiting endo-beta-1,4-glucanase activity (E.C. 3.2.1.4), including a bacterial polypeptide endogenous to a member of the genus *Bacillus* which has a sequence of at least 90%, 94%, 97% and even 99% identity to the amino acid sequence SEQ ID NO:2 in US7,141,403B2) and mixtures thereof. Suitable endoglucanases are sold under the tradenames Celluclean® and Whitezyme® (Novozymes A/S, Bagsvaerd, Denmark).

**Pectate Lyases.** Other preferred enzymes include pectate lyases sold under the tradenames Pectawash®, Pectaway®, Xpect® and mannanases sold under the tradenames Mannaway® (all from Novozymes A/S, Bagsvaerd, Denmark), and Purabrite® (Genencor International Inc., Palo Alto, California).

**Bleaching Agents.** It may be preferred for the detergent composition to comprise one or more bleaching agents. Suitable bleaching agents other than bleaching catalysts include photobleaches, bleach activators, hydrogen peroxide, sources of hydrogen peroxide, pre-formed peracids and mixtures thereof. In general, when a bleaching agent is used, the compositions of the present invention may comprise from 0.1% to 50% or even from 0.1% to 25% bleaching agent or mixtures of bleaching agents by weight of the subject composition. Examples of suitable bleaching agents include:
(1) photobleaches for example sulfonated zinc phthalocyanine sulfonated aluminium phthalocyanines, xanthene dyes and mixtures thereof;
(2) pre-formed peracids: Suitable preformed peracids include, but are not limited to compounds selected from the group consisting of pre-formed peroxyacids or salts thereof typically a percarboxylic acids and salts, percarbonic acids and salts, perimidic acids and salts, peroxymonosulfuric acids and salts, for example, Oxone ®, and mixtures thereof. Suitable examples include peroxycarboxylic acids or salts thereof, or peroxysulphonic acids or salts thereof. Typical peroxycarboxylic acid salts suitable for use herein have a chemical structure corresponding to the following chemical formula: 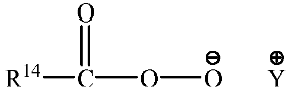 wherein: R¹⁴ is selected from alkyl, aralkyl, cycloalkyl, aryl or heterocyclic groups; the R¹⁴ group can be linear or branched, substituted or unsubstituted; having, when the peracid is hydrophobic, from 6 to 14 carbon atoms, or from 8 to 12 carbon atoms and, when the peracid is hydrophilic, less than 6 carbon atoms or even less than 4 carbon atoms and Y is any suitable counter-ion that achieves electric charge neutrality, preferably Y is selected from hydrogen, sodium or potassium. Preferably, R¹⁴ is a linear or branched, substituted or unsubstituted C₆₋₉ alkyl. Preferably, the peroxyacid or salt thereof is selected from peroxyhexanoic acid, peroxyheptanoic acid, peroxyoctanoic acid, peroxynonanoic acid, peroxydecanoic acid, any salt thereof, or any combination thereof. Particularly preferred peroxyacids are phthalimido-peroxy-alkanoic acids, in particular ε-phthalimido peroxy hexanoic acid (PAP). Preferably, the peroxyacid or salt thereof has a melting point in the range of from 30°C to 60°C.
   The pre-formed peroxyacid or salt thereof can also be a peroxysulphonic acid or salt thereof, typically having a chemical structure corresponding to the following chemical formula: 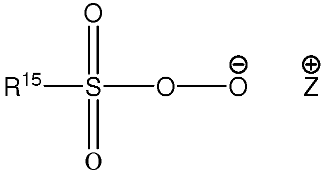 wherein: R¹⁵ is selected from alkyl, aralkyl, cycloalkyl, aryl or heterocyclic groups; the R¹⁵ group can be linear or branched, substituted or unsubstituted; and Z is any suitable counter-ion that achieves electric charge neutrality, preferably Z is selected from hydrogen, sodium or potassium. Preferably R¹⁵ is a linear or branched, substituted or unsubstituted C₄₋₁₄, preferably C₆₋₁₄ alkyl. Preferably such bleach components may be present in the compositions of the invention in an amount from 0.01 to 50%, most preferably from 0.1% to 20%.
(3) sources of hydrogen peroxide, for example, inorganic perhydrate salts, including alkali metal salts such as sodium salts of perborate (usually mono- or tetra-hydrate), percarbonate, persulphate, perphosphate, persilicate salts and mixtures thereof. In one aspect of the invention the inorganic perhydrate salts are selected from the group consisting of sodium salts of perborate, percarbonate and mixtures thereof. When employed, inorganic perhydrate salts are typically present in amounts of from 0.05 to 40 wt%, or 1 to 30 wt% of the overall fabric and home care product and are typically incorporated into such fabric and home care products as a crystalline solid that may be coated. Suitable coatings include, inorganic salts such as alkali metal silicate, carbonate or borate salts or mixtures thereof, or organic materials such as water-soluble or dispersible polymers, waxes, oils or fatty soaps; and
(4) bleach activators having R-(C=O)-L wherein R is an alkyl group, optionally branched, having, when the bleach activator is hydrophobic, from 6 to 14 carbon atoms, or from 8 to 12 carbon atoms and, when the bleach activator is hydrophilic, less than 6 carbon atoms or even less than 4 carbon atoms; and L is leaving group. Examples of suitable leaving groups are benzoic acid and derivatives thereof - especially benzene sulphonate. Suitable bleach activators include dodecanoyl oxybenzene sulphonate, decanoyl oxybenzene sulphonate, decanoyl oxybenzoic acid or salts thereof, 3,5,5-trimethyl hexanoyloxybenzene sulphonate, tetraacetyl ethylene diamine (TAED) and nonanoyloxybenzene sulphonate (NOBS). Suitable bleach activators are also disclosed in WO 98/17767. While any suitable bleach activator may be employed, in one aspect of the invention the subject composition may comprise NOBS, TAED or mixtures thereof.
(5) Bleach Catalysts. The compositions of the present invention may also include one or more bleach catalysts capable of accepting an oxygen atom from a peroxyacid and/or salt thereof, and transferring the oxygen atom to an oxidizeable substrate. Suitable bleach catalysts include, but are not limited to: iminium cations and polyions; iminium zwitterions; modified amines; modified amine oxides; N-sulphonyl imines; N-phosphonyl imines; N-acyl imines; thiadiazole dioxides; perfluoroimines; cyclic sugar ketones and alpha amino-ketones and mixtures thereof. Suitable alpha amino ketones are for example as described in WO 2012/000846 A1, WO 2008/015443 A1, and WO 2008/014965 A1. Suitable mixtures are as described in USPA 2007/0173430 A1.
   Without wishing to be bound by theory, the inventors believe that controlling the electophilicity and hydrophobicity in this above described manner enables the bleach ingredient to be delivered substantially only to areas of the fabric that are more hydrophobic, and that contain electron rich soils, including visible chromophores, that are susceptible to bleaching by highly electrophilic oxidants.
   In one aspect, the bleach catalyst has a structure corresponding to general formula below: 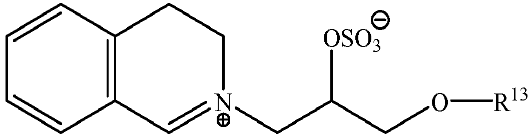 wherein R¹³ is selected from the group consisting of 2-ethylhexyl, 2-propylheptyl, 2-butyloctyl, 2-pentylnonyl, 2-hexyldecyl, n-dodecyl, n-tetradecyl, n-hexadecyl, n-octadecyl, isononyl, iso-decyl, iso-tridecyl and iso-pentadecyl;
(6) The composition may preferably comprise catalytic metal complexes. One preferred type of metal-containing bleach catalyst is a catalyst system comprising a transition metal cation of defined bleach catalytic activity, such as copper, iron, titanium, ruthenium, tungsten, molybdenum, or manganese cations, an auxiliary metal cation having little or no bleach catalytic activity, such as zinc or aluminum cations, and a sequestrate having defined stability constants for the catalytic and auxiliary metal cations, particularly ethylenediaminetetraacetic acid, ethylenediaminetetra(methylenephosphonic acid) and water-soluble salts thereof. Such catalysts are disclosed in U.S. 4,430,243.

If desired, the compositions herein can be catalyzed by means of a manganese compound. Such compounds and levels of use are well known in the art and include, for example, the manganese-based catalysts disclosed in U.S. 5,576,282.
Cobalt bleach catalysts useful herein are known, and are described, for example, in U.S. 5,597,936; U.S. 5,595,967. Such cobalt catalysts are readily prepared by known procedures, such as taught for example in U.S. 5,597,936, and U.S. 5,595,967.

Compositions herein may also suitably include a transition metal complex of ligands such as bispidones (WO 05/042532 A1) and/or macropolycyclic rigid ligands - abbreviated as "MRLs". As a practical matter, and not by way of limitation, the compositions and processes herein can be adjusted to provide on the order of at least one part per hundred million of the active MRL species in the aqueous washing medium, and will typically provide from 0.005 ppm to 25 ppm, from 0.05 ppm to 10 ppm, or even from 0.1 ppm to 5 ppm, of the MRL in the wash liquor.

Suitable transition-metals in the instant transition-metal bleach catalyst include, for example, manganese, iron and chromium. Suitable MRLs include 5,12-diethyl-1,5,8,12-tetraazabicyclo[6.6.2]hexadecane.
Suitable transition metal MRLs are readily prepared by known procedures, such as taught for example in WO 00/32601, and U.S. 6,225,464.

When present, the source of hydrogen peroxide/peracid and/or bleach activator is generally present in the composition in an amount of from 0.1 to 60 wt%, from 0.5 to 40 wt % or even from 0.6 to 10 wt% based on the fabric and home care product. One or more hydrophobic peracids or precursors thereof may be used in combination with one or more hydrophilic peracid or precursor thereof.

Typically hydrogen peroxide source and bleach activator will be incorporated together .The amounts of hydrogen peroxide source and peracid or bleach activator may be selected such that the molar ratio of available oxygen (from the peroxide source) to peracid is from 1:1 to 35:1, or even 2:1 to 10:1.
1. **Surfactant.** Preferably the detergent composition comprises a surfactant or surfactant system. The surfactant can be selected from nonionic, anionic, cationic, amphoteric, ampholytic, amphiphilic, zwitterionic, semi-polar nonionic surfactants and mixtures thereof. Preferred compositions comprise a mixture of surfactants/surfactant system. Preferred surfactant systems comprise one or more anionic surfactants, most preferably in combination with a co-surfactant, most preferably a nonionic and/or amphoteric and/or zwitterionic surfactant. Preferred surfactant systems comprise both anionic and nonionic surfactant, preferably in weight ratios from 90:1 to 2:3 or even 1:90. In some instances a weight ratio of anionic to nonionic surfactant of at least 1:1 is preferred. However a ratio below 10:1 may be preferred. When present, the total surfactant level is preferably from 0.1% to 60%, from 1% to 50% or even from 5% to 40% by weight of the subject composition. The composition preferably comprises from 2 to 70 wt% anionic and/or nonionic surfactant, preferably selected from alkyl benzene sulphonate, optionally ethoxylated alkyl sulphate, and alkoxylated nonionic surfactant.

Preferably the composition comprises an anionic detersive surfactant, preferably sulphate and/or sulphonate surfactants. Preferred examples include alkyl benzene sulphonates, alkyl sulphates and alkyl alkoxylated sulphates. Preferred sulphonates are C₁₀₋₁₃ alkyl benzene sulphonate. Suitable alkyl benzene sulphonate (LAS) may be obtained, by sulphonating commercially available linear alkyl benzene (LAB); suitable LAB includes low 2-phenyl LAB, such as those supplied by Sasol under the tradename Isochem® or those supplied by Petresa under the tradename Petrelab®, other suitable LAB include high 2-phenyl LAB, such as those supplied by Sasol under the tradename Hyblene®. A suitable anionic detersive surfactant is alkyl benzene sulphonate that is obtained by DETAL catalyzed process, although other synthesis routes, such as HF, may also be suitable. In one aspect a magnesium salt of LAS is used.

Preferred sulphate detersive surfactants include alkyl sulphate, typically C₈₋₁₈ alkyl sulphate, or predominantly C₁₂ alkyl sulphate. A further preferred alkyl sulphate is alkyl alkoxylated sulphate, preferably a C₈₋₁₈ alkyl alkoxylated sulphate. Preferably the alkoxylating group is an ethoxylating group. Typically the alkyl alkoxylated sulphate has an average degree of alkoxylation of from 0.5 to 30 or 20, or from 0.5 to 10. Particularly preferred are C₈₋₁₈ alkyl ethoxylated sulphate having an average degree of ethoxylation of from 0.5 to 10, from 0.5 to 7, from 0.5 to 5 or even from 0.5 to 3.

The alkyl sulphate, alkyl alkoxylated sulphate and alkyl benzene sulphonates may be linear or branched, substituted or un-substituted. When the surfactant is branched, preferably the surfactant will comprise a mid-chain branched sulphate or sulphonate surfactant. Preferably the branching groups comprise C₁₋₄ alkyl groups, typically methyl and/or ethyl groups.

Preferably the composition comprises a nonionic detersive surfactant. Suitable non-ionic surfactants are selected from the group consisting of: Cs-Cis alkyl ethoxylates, such as, NEODOL® non-ionic surfactants from Shell; C₆-C₁₂ alkyl phenol alkoxylates wherein the alkoxylate units may be ethyleneoxy units, propyleneoxy units or a mixture thereof; C₁₂-C₁₈ alcohol and C₆-C₁₂ alkyl phenol condensates with ethylene oxide/propylene oxide block polymers such as Pluronic® from BASF; C₁₄-C₂₂ mid-chain branched alcohols; C₁₄-C₂₂ mid-chain branched alkyl alkoxylates, typically having an average degree of alkoxylation of from 1 to 30; alkylpolysaccharides, in one aspect, alkylpolyglycosides; polyhydroxy fatty acid amides; ether capped poly(oxyalkylated) alcohol surfactants; and mixtures thereof.

Suitable non-ionic detersive surfactants include alkyl polyglucoside and/or an alkyl alkoxylated alcohol.

In one aspect, non-ionic detersive surfactants include alkyl alkoxylated alcohols, in one aspect C₈₋₁₈ alkyl alkoxylated alcohol, for example a C₈₋₁₈ alkyl ethoxylated alcohol, the alkyl alkoxylated alcohol may have an average degree of alkoxylation of from 1 to 80, preferably from 1 to 50, most preferably from 1 to 30, from 1 to 20, or from 1 to 10. In one aspect, the alkyl alkoxylated alcohol may be a C₈₋₁₈ alkyl ethoxylated alcohol having an average degree of ethoxylation of from 1 to 10, from 1 to 7, more from 1 to 5 or from 3 to 7, or even below 3 or 2. The alkyl alkoxylated alcohol can be linear or branched, and substituted or un-substituted.

Suitable nonionic surfactants include those with the tradename Lutensol® (BASF).

Suitable cationic detersive surfactants include alkyl pyridinium compounds, alkyl quaternary ammonium compounds, alkyl quaternary phosphonium compounds, alkyl ternary sulphonium compounds, and mixtures thereof.

When cationic surfactant is present, preferably it is present in an amount no greater than 4 wt%, more preferably less than 2 wt% of the composition. Where present the weight ratio of hydrophobic brightener to cationic surfactant is preferably from 5:1 to 1:5.

Suitable cationic detersive surfactants are quaternary ammonium compounds having the general formula:

(R)(R₁)(R₂)(R₃)N⁺ X⁻

wherein, R is a linear or branched, substituted or unsubstituted C₆₋₁₈ alkyl or alkenyl moiety, R₁ and R₂ are independently selected from methyl or ethyl moieties, R₃ is a hydroxyl, hydroxymethyl or a hydroxyethyl moiety, X is an anion which provides charge neutrality, suitable anions include: halides, for example chloride; sulphate; and sulphonate. Suitable cationic detersive surfactants are mono-C₆₋₁₈ alkyl mono-hydroxyethyl di-methyl quaternary ammonium chlorides. Highly suitable cationic detersive surfactants are mono-C₈₋₁₀ alkyl mono-hydroxyethyl di-methyl quaternary ammonium chloride, mono-C₁₀₋₁₂ alkyl mono-hydroxyethyl di-methyl quaternary ammonium chloride and mono-C₁₀ alkyl mono-hydroxyethyl di-methyl quaternary ammonium chloride.

Suitable amphoteric/zwitterionic surfactants include amine oxides and betaines.

Amine-neutralized anionic surfactants - Anionic surfactants of the present invention and adjunct anionic cosurfactants, may exist in an acid form, and said acid form may be neutralized to form a surfactant salt which is desirable for use in the present detergent compositions. Typical agents for neutralization include the metal counterion base such as hydroxides, eg, NaOH or KOH. Further preferred agents for neutralizing anionic surfactants of the present invention and adjunct anionic surfactants or cosurfactants in their acid forms include ammonia, amines, or alkanolamines. Alkanolamines are preferred. Suitable non-limiting examples including monoethanolamine, diethanolamine, triethanolamine, and other linear or branched alkanolamines known in the art; for example, highly preferred alkanolamines include 2-amino-1-propanol, 1-aminopropanol, monoisopropanolamine, or 1-amino-3-propanol. Amine neutralization may be done to a full or partial extent, e.g. part of the anionic surfactant mix may be neutralized with sodium or potassium and part of the anionic surfactant mix may be neutralized with amines or alkanolamines.

**Builders.** Preferably the detergent composition comprises one or more builders or a builder system. When a builder is used, the composition of the invention will typically comprise at least 1%, or at least 2% to 60% builder. Suitable builders include for example zeolite, phosphate and citrate. It may be preferred that the composition comprises low levels of phosphate salt and/or zeolite, for example from 1 to 10 or 5 wt%. The composition may even be substantially free of strong builder; substantially free of strong builder means "no deliberately added" zeolite and/or phosphate. Typical zeolite builders include zeolite A, zeolite P and zeolite MAP. A typical phosphate builder is sodium tri-polyphosphate.

**Chelating Agent.** Preferably the detergent composition comprises chelating agents and/or crystal growth inhibitor. Suitable molecules include copper, iron and/or manganese chelating agents and mixtures thereof. Suitable molecules include aminocarboxylates, aminophosphonates, succinates, salts thereof, and mixtures thereof. Non-limiting examples of suitable chelants for use herein include ethylenediaminetetracetates, N- (hydroxyethyl)ethylenediaminetriacetates, nitrilotriacetates, ethylenediamine tetraproprionates, triethylenetetraaminehexacetates, diethylenetriamine-pentaacetates, ethanoldiglycines, ethylenediaminetetrakis (methylenephosphonates), diethylenetriamine penta(methylene phosphonic acid) (DTPMP), ethylenediamine disuccinate (EDDS), hydroxyethanedimethylenephosphonic acid (HEDP), methylglycinediacetic acid (MGDA), diethylenetriaminepentaacetic acid (DTPA), salts thereof, and mixtures thereof. Other nonlimiting examples of chelants of use in the present invention are found in U.S. Patent Nos. 7445644, 7585376 and 2009/0176684A1. Other suitable chelating agents for use herein are the commercial DEQUEST series, and chelants from Monsanto, DuPont, and Nalco, Inc.

**pH Modifiers.** pH modifiers may be incorporated to generate the desired pH. Any alkali or acid may be added known to those skilled in the art of detergent manufacture, for example, sodium or potassium hydroxide carbonate or silicate, citric acid, or stronger acids such as hydrochloric acid. Those pH modifiers which add buffering capacity may be particularly preferred.

**Additional Optical Brightener.** The detergent composition may additionally comprise one or more optional additional brighteners, typically having a ClogP below 1 or 0, preferably from -1 to -50(herein, low ClogP), or -2 to -50, or -2.5 to -50, or -3 to -50 or -40 or -30 or -20 or even to -10. ClogP is calculated using Advanced Chemistry Development Software V11.02 (© 1994-2012 ACD/Labs), Advanced Chemistry Development, Inc., Toronto, Ontario, Canada M5C 1B5. Suitable examples are for example stilbene brighteners. Diaminostilbene disulphonic acid type brighteners (hereinafter referred to as "DAS") are classified as hydrophilic in WO-A-98/52907. A commercial example of a DAS is Tinopal DMS (ex CIBA). Another preferred type of hydrophilic brightener is a distyrylbiphenyl brightener (hereinafter referred to as "DSBP"). A commercial example of this type of brightener is Tinopal CBS-X (also ex CIBA). Commercial optical brighteners which may be useful in the present invention can be classified into subgroups, which include, but are not limited to, derivatives of stilbene, pyrazoline, carboxylic acid, methinecyanines, dibenzothiophene-5,5-dioxide,
5- and 6-membered-ring heterocycles, and other miscellaneous agents. Particularly preferred additional brighteners are stilbenes, especially those selected from: sodium 2 (4-styryl-3-sulfophenyl)-2H-naphtho[1,2-d]triazole, disodium 4,4'-bis([4-anilino-6-(N-methyl-2-hydroxyethylamino)-1,3,5-triazin-2-yl]amino)stilbene-2,2'-disulfonate, disodium 4,4'-bis[(4-anilino-6-morpholino-1,3,5-triazin-2-yl)amino]stilbene-2,2'-disulfonate, and disodium 4,4'-bis(2-sulfostyryl)biphenyl. Other examples of such brighteners are disclosed in "The Production and Application of Fluorescent Brightening Agents", M. Zahradnik, Published by John Wiley & Sons, New York (1982).

A preferred additional brightener has the structure below:

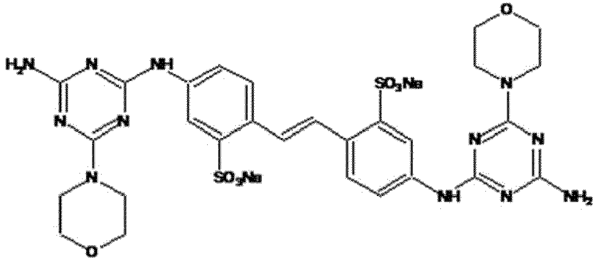

Suitable levels of additional brightener are from 0.01, from 0.05, from 0.1 or even from 0.2 wt % to upper levels of 0.5, of 0.75 or even 1.0 wt %.

One or more of the optical brighteners may be loaded onto a clay to form a particle.

Preferred additional brighteners are totally or predominantly (typically at least 50wt%, at least 75wt%, at least 90wt%, at least 99wt%), in alpha-crystalline form. A highly preferred additional brightener comprises C.I. fluorescent brightener 260 (preferably having the following structure:

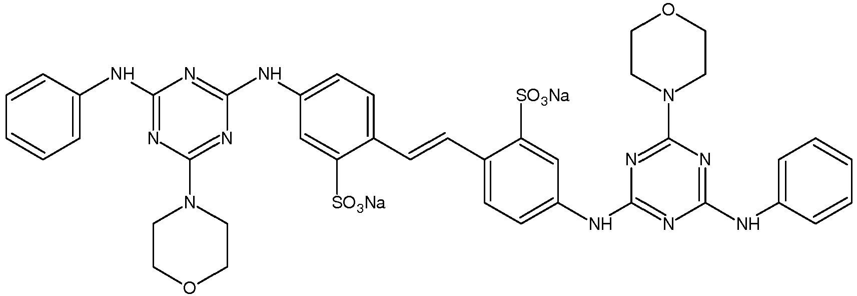

A process for making C.I fluorescent brightener 260 in alpha-crystalline form is described in BE680847.

One preferred method of incorporating brighteners into detergent compositions is in micronized particulate form, most preferably having a weight average primary particle size of from 3 to 30 micrometers, from 3 micrometers to 20 micrometers, or from 3 to 10 micrometers.

The additional brightener may comprise C.I. fluorescent brightener 260 in beta-crystalline form, and the weight ratio of: (i) C.I. fluorescent brightener 260 in alpha-crystalline form, to (ii) C.I. fluorescent brightener 260 in beta-crystalline form may be at least 0.1, or at least 0.6. When both high and low ClogPbrighteners are present in the composition, preferably the weight ratio of high ClogPto low ClogP brightener is from 1:100 to 100:1, or from 1:25 to 25:1, or from 1:10 to 10:1, or even from 1:5 to 5:1. It may be preferred to additionally incorporate a carrier as described in WO2007/104916 for one or more of the optical brighteners. The weight ratio of high ClogP brightener to low ClogP brightener is preferably from 20:1 to 1:20, more preferably 5:1 to 1:10.

**Dye Transfer Inhibitor (DTI).** The composition may comprise one or mixtures of more than one dye transfer inhibiting agents, when present in an amount of 0.005 to 10 wt% of a dye transfer inhibitor. Suitable dye transfer inhibitors are selected from the group consisting of: polyvinylpyrrolidone polymers, polyamine N-oxide polymers, copolymers of N-vinylpyrrolidone and N-vinylimidazole, polyvinyloxazolidones, polyvinylimidazoles and mixtures thereof. Other suitable DTIs are triazines as described in WO2012/095354, polymerized benzoxazines as described in WO2010/130624, polyvinyl tetrazoles as described in DE 102009001144A, porous polyamide particles as described in WO2009/127587 and insoluble polymer particles as described in WO2009/124908. Other suitable DTIs are described in WO2012/004134, or polymers selected from the group consisting of (a) amphiphilic alkoxylated polyamines, amphiphilic graft co-polymers, zwitterionic soil suspension polymers, manganese phthalocyanines, peroxidases and mixtures thereof.

Preferred classes of DTI include but are not limited to polyvinylpyrrolidone polymers, polyamine N-oxide polymers, copolymers of N-vinylpyrrolidone and N-vinylimidazole, polyvinyloxazolidones, polyvinylimidazoles and mixtures thereof. More specifically, the polyamine N-oxide polymers preferred for use herein contain units having the following structural formula: R-AX-P; wherein P is a polymerizable unit to which an N-O group can be attached or the N-O group can form part of the polymerizable unit or the N-O group can be attached to both units; A is one of the following structures: -NC(O)-, -C(O)O-, -S-, -O-, -N=; x is 0 or 1; and R is aliphatic, ethoxylated aliphatics, aromatics, heterocyclic or alicyclic groups or any combination thereof to which the nitrogen of the N-O group can be attached or the N-O group is part of these groups. Preferred polyamine N-oxides are those wherein R is a heterocyclic group such as pyridine, pyrrole, imidazole, pyrrolidine, piperidine and derivatives thereof.

The N-O group can be represented by the following general structures: 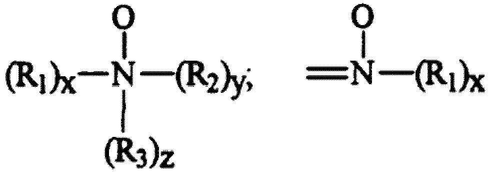 wherein R1, R2, R3 are aliphatic, aromatic, heterocyclic or alicyclic groups or combinations thereof; x, y and z are 0 or 1; and the nitrogen of the N-O group can be attached or form part of any of the aforementioned groups. The amine oxide unit of the polyamine N-oxides has a pKa < 10, preferably pKa < 7, more preferred pKa < 6.

Any polymer backbone can be used as long as the amine oxide polymer formed is water-soluble and has dye transfer inhibiting properties. Examples of suitable polymeric backbones are polyvinyls, polyalkylenes, polyesters, polyethers, polyamide, polyimides, polyacrylates and mixtures thereof. These polymers include random or block copolymers where one monomer type is an amine N-oxide and the other monomer type is an N-oxide. The amine N-oxide polymers typically have a ratio of amine to the amine N-oxide of 10:1 to 1:1,000,000. However, the number of amine oxide groups present in the polyamine oxide polymer can be varied by appropriate copolymerization or by an appropriate degree of N-oxidation. The polyamine oxides can be obtained in almost any degree of polymerization.

Typically, the average molecular weight is within the range of 500 to 1,000,000; more preferred 1,000 to 500,000; most preferred 5,000 to 100,000. This preferred class of materials can be referred to as "PVNO".

The most preferred polyamine N-oxide useful in the detergent compositions herein is poly(4-vinylpyridine-N-oxide) which as an average molecular weight of 50,000 and an amine to amine N-oxide ratio of 1:4.

Copolymers of N-vinylpyrrolidone and N-vinylimidazole polymers (referred to as a class as "PVPVI") are also preferred for use herein. Preferably the PVPVI has an average molecular weight range from 5,000 to 1,000,000, more preferably from 5,000 to 200,000, and most preferably from 10,000 to 20,000. (The average molecular weight range is determined by light scattering as described in Barth, et al.,

Chemical Analysis, Vol 113. "Modem Methods of Polymer Characterization", . The PVPVI copolymers typically have a molar ratio of N-vinylimidazole to N-vinylpyrrolidone from 1:1 to 0.2:1, more preferably from 0.8:1 to 0.3:1, most preferably from 0.6:1 to 0.4:1.

These copolymers can be either linear or branched.

The present invention compositions also may employ a polyvinylpyrrolidone ("PVP") having an average molecular weight of from 5,000 to 400,000, preferably from 5,000 to 200,000, and more preferably from 5,000 to 50,000. PVP's are known to persons skilled in the detergent field; see, for example, EP-A-262,897 and EP-A-256,696.

Compositions containing PVP can also contain polyethylene glycol ("PEG") having an average molecular weight from 500 to 100,000, preferably from 1,000 to 10,000. Preferably, the ratio of PEG to PVP on a ppm basis delivered in wash solutions is from to 50:1, and more preferably from 3:1 to 10.1.

A mixed polymer system comprising copolymers of (a) N-vinylpyrrolidone and N-vinylimidazole and (b) polyamine N-oxide polymers, particularly poly 4-vinylpyridine N-oxide are a particularly preferred DTI system, particularly preferred in weight ratios of (a):(b) of 5:1 to 1:5. Preferred molecular weights for the DTI essential to the present invention are from 1000 to 250000 Daltons, more preferably from 2000 to 150000 or even from 8000 to 100000 Daltons.

Suitable examples include PVP-K15, PVP-K30, ChromaBond S-400, ChromaBond S-403E and Chromabond S-100 from Ashland Aqualon, and Sokalan® HP165, Sokalan® HP50, Sokalan® HP53, Sokalan® HP59, Sokalan® HP 56K, Sokalan® HP 66 from BASF.

The inventors have found that the compositions comprising high ClogP optical brightener and DTI provide significant increase in whiteness and this is surprising because typically DTIs reduce the efficacy of optical brighteners.
The dye transfer inhibiting agent may be present at levels from 0.0001% to 15%, from 0.01% to 10%, preferably from 0.01 % to 5% by weight of the composition. Dye transfer inhibitor may be present in the wash liquor typically in an amount from 1ppb to 50ppm, more preferably from 15ppb to 50ppm or even 500ppb to 35ppm or 1ppm to 25ppm.

**Silicate Salts.** The detergent composition may preferably also contain silicate salts, such as sodium or potassium silicate. The composition may comprise from 0wt% to less than 10wt% silicate salt, to 9wt%, or to 8wt%, or to 7wt%, or to 6wt%, or to 5wt%, or to 4wt%, or to 3wt%, or even to 2wt%, and preferably from above 0wt%, or from 0.5wt%, or even from 1wt% silicate salt. A suitable silicate salt is sodium silicate.

**Dispersants.** The detergent composition may preferably also contain dispersants. Suitable water-soluble organic materials include the homo- or co-polymeric acids or their salts, in which the polycarboxylic acid comprises at least two carboxyl radicals separated from each other by not more than two carbon atoms.

**Enzyme Stabilisers.** The detergent composition may preferably comprise enzyme stabilizers. Any conventional enzyme stabilizer may be used, for example by the presence of water-soluble sources of calcium and/or magnesium ions in the finished fabric and home care products that provide such ions to the enzymes. In case of aqueous compositions comprising protease, a reversible protease inhibitor, such as a boron compound including borate, or preferably 4-formyl phenylboronic acid, phenylboronic acid and derivatives thereof, or compounds such as calcium formate, sodium formate and 1,2-propane diol, diethylene glycol can be added to further improve stability.

**Solvent System.** The present compositions may comprise a solvent system for example comprising water alone or mixtures of organic solvents either without or with water. Preferred organic solvents include 1,2-propanediol, ethanol, glycerol, dipropylene glycol, methyl propane diol and mixtures thereof. Other lower alcohols, C1-C4 alkanolamines such as monoethanolamine and triethanolamine, can also be used. Solvent systems can be absent, for example from anhydrous solid embodiments of the invention, but more typically are present at levels in the range of from 0.1% to 98%, preferably at least 1% to 50%, more usually from 5% to 25%. Such solvent systems may be particularly useful for pre-mixing with the hydrophobic brightener prior to mixing the hydrophobic brightener with other components in the detergent composition. Alternatively or in addition, surfactant(s) may be pre-mixed with the hydrophobic brightener. In such a preferred embodiment, the surfactant pre-mixed with the hydrophobic brightener comprises at least 25 wt% or at least 50 wt% (based on the total weight of the surfactant) of nonionic surfactant.

In some embodiments of the invention, the composition is in the form of a structured liquid. Such structured liquids can either be internally structured, whereby the structure is formed by primary ingredients (e.g. surfactant material) and/or externally structured by providing a three dimensional matrix structure using secondary ingredients (e.g. polymers, clay and/or silicate material), for use e.g. as thickeners. The composition may comprise a structurant, preferably from 0.01wt% to 5wt%, from 0.1wt% to 2.0wt% structurant. Examples of suitable structurants are given in US2006/0205631A1, US2005/0203213A1, US7294611, US6855680. The structurant is typically selected from the group consisting of diglycerides and triglycerides, ethylene glycol distearate, microcrystalline cellulose, cellulose-based materials, microfiber cellulose, hydrophobically modified alkali-swellable emulsions such as Polygel W30 (3VSigma), biopolymers, xanthan gum, gellan gum, hydrogenated castor oil, derivatives of hydrogenated castor oil such as non-ethoxylated derivatieves thereof and mixtures thereof, in particular, those selected from the group of hydrogenated castor oil, derivatives of hydrogenated castor oil, microfibullar cellulose, hydroxyfunctional crystalline materials, long chain fatty alcohols, 12-hydroxystearic acids, clays and mixtures thereof.A preferred structurant is described in . US Patent No. 6,855,680 which defines suitable hydroxyfunctional crystalline materials in detail. Preferred is hydrogenated castor oil. Non-limiting examples of useful structurants include.. Such structurants have a thread-like structuring system having a range of aspect ratios. Other suitable structurants and the processes for making them are described in WO2010/034736.

The composition of the present invention may comprise a high melting point fatty compound. The high melting point fatty compound useful herein has a melting point of 25°C or higher, and is selected from the group consisting of fatty alcohols, fatty acids, fatty alcohol derivatives, fatty acid derivatives, and mixtures thereof. Such compounds of low melting point are not intended to be included in this section. Non-limiting examples of the high melting point compounds are found in International Cosmetic Ingredient Dictionary, Fifth Edition, 1993, and CTFA Cosmetic Ingredient Handbook, Second Edition, 1992. When present, the high melting point fatty compound is preferably included in the composition at a level of from 0.1% to 40%, preferably from 1% to 30%, more preferably from 1.5% to 16% by weight of the composition, from 1.5% to 8% in view of providing improved conditioning benefits such as slippery feel during the application to wet hair, softness and moisturized feel on dry hair.

**Cationic Polymer.** The compositions of the present invention may contain a cationic polymer. Concentrations of the cationic polymer in the composition typically range from 0.05% to 3%, in another embodiment from 0.075% to 2.0%, and in yet another embodiment from 0.1% to 1.0%. Suitable cationic polymers will have cationic charge densities of at least 0.5 meq/gm, in another embodiment at least 0.9 meq/gm, in another embodiment at least 1.2 meq/gm, in yet another embodiment at least 1.5 meq/gm, but in one embodiment also less than 7 meq/gm, and in another embodiment less than 5 meq/gm, at the pH of intended use of the composition, which pH will generally range from pH 3 to pH 9, in one embodiment between pH 4 and pH 8. Herein, "cationic charge density" of a polymer refers to the ratio of the number of positive charges on the polymer to the molecular weight of the polymer. The average molecular weight of such suitable cationic polymers will generally be between 10,000 and 10 million, in one embodiment between 50,000 and 5 million, and in another embodiment between 100,000 and 3 million.

Suitable cationic polymers for use in the compositions of the present invention contain cationic nitrogen-containing moieties such as quaternary ammonium or cationic protonated amino moieties. Any anionic counterions can be used in association with the cationic polymers so long as the polymers remain soluble in water, in the composition, or in a coacervate phase of the composition, and so long as the counterions are physically and chemically compatible with the essential components of the composition or do not otherwise unduly impair product performance, stability or aesthetics. Nonlimiting examples of such counterions include halides (e.g., chloride, fluoride, bromide, iodide), sulfate and methylsulfate.

Nonlimiting examples of such polymers are described in the CTFA Cosmetic Ingredient Dictionary, 3rd edition, edited by Estrin, Crosley, and Haynes, (The Cosmetic, Toiletry, and Fragrance Association, Inc., Washington, D.C. (1982)).

Other suitable cationic polymers for use in the composition include polysaccharide polymers, cationic guar gum derivatives, quaternary nitrogen-containing cellulose ethers, synthetic polymers, copolymers of etherified cellulose, guar and starch. When used, the cationic polymers herein are either soluble in the composition or are soluble in a complex coacervate phase in the composition formed by the cationic polymer and the anionic, amphoteric and/or zwitterionic surfactant component described hereinbefore. Complex coacervates of the cationic polymer can also be formed with other charged materials in the composition.

Suitable cationic polymers are described in U.S. Pat. Nos. 3,962,418; 3,958,581; and U.S. Publication No. 2007/0207109A1.

**Nonionic Polymer.** The detergent composition of the present invention may include a nonionic polymer as a conditioning agent. Polyalkylene glycols having a molecular weight of more than 1000 are useful herein. Useful are those having the following general formula: 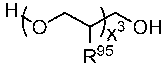 wherein R95 is selected from the group consisting of H, methyl, and mixtures thereof. Conditioning agents, and in particular silicones, may be included in the composition. The conditioning agents useful in the compositions of the present invention typically comprise a water insoluble, water dispersible, non-volatile, liquid that forms emulsified, liquid particles. Suitable conditioning agents for use in the composition are those conditioning agents characterized generally as silicones (e.g., silicone oils, cationic silicones, silicone gums, high refractive silicones, and silicone resins), organic conditioning oils (e.g., hydrocarbon oils, polyolefins, and fatty esters) or combinations thereof, or those conditioning agents which otherwise form liquid, dispersed particles in the aqueous surfactant matrix herein. Such conditioning agents should be physically and chemically compatible with the essential components of the composition, and should not otherwise unduly impair product stability, aesthetics or performance.

The concentration of the conditioning agent in the composition should be sufficient to provide the desired conditioning benefits. Such concentration can vary with the conditioning agent, the conditioning performance desired, the average size of the conditioning agent particles, the type and concentration of other components.

The concentration of the silicone conditioning agent typically ranges from 0.01% to 10%. Non-limiting examples of suitable silicone conditioning agents, and optional suspending agents for the silicone, are described in U.S. Reissue Pat. No. 34,584, U.S. Pat. Nos. 5,104,646; 5,106,609; 4,152,416; 2,826,551; 3,964,500; 4,364,837; 6,607,717; 6,482,969; 5,807,956; 5,981,681; 6,207,782; 7,465,439; 7,041,767; 7,217,777; US Patent Application Nos. 2007/0286837A1; 2005/0048549A1; 2007/0041929A1; British Pat. No. 849,433; German Patent No. DE 10036533; Chemistry and Technology of Silicones, New York: Academic Press (1968); General Electric Silicone Rubber Product Data Sheets SE 30, SE 33, SE 54 and SE 76; Silicon Compounds, Petrarch Systems, Inc. (1984); and in Encyclopedia of Polymer Science and Engineering, vol. 15, 2d ed., pp 204-308, John Wiley & Sons, Inc. (1989).

**Organic Conditioning Oil.** The compositions of the present invention may also comprise from 0.05% to 3% of at least one organic conditioning oil as the conditioning agent, either alone or in combination with other conditioning agents, such as the silicones (described herein). Suitable conditioning oils include hydrocarbon oils, polyolefins, and fatty esters. Also suitable for use in the compositions herein are the conditioning agents described by the Procter & Gamble Company in U.S. Pat. Nos. 5,674,478, and 5,750,122. Also suitable for use herein are those conditioning agents described in U.S. Pat. Nos. 4,529,586, 4,507,280, 4,663,158, 4,197,865, 4,217, 914, 4,381,919, and 4,422, 853.

**Hygiene Agent.** The compositions of the present invention may also comprise components to deliver hygiene and/or malodour benefits such as one or more of zinc ricinoleate, thymol, quaternary ammonium salts such as Bardac®, polyethylenimines (such as Lupasol® from BASF) and zinc complexes thereof, silver and silver compounds, especially those designed to slowly release Ag+ or nano-silver dispersions.

**Probiotics.** The detergent composition may comprise probiotics, such as those described in WO2009/043709.

**Suds Boosters.** The detergent composition may preferably comprise suds boosters if high sudsing is desired. Suitable examples are the C10-C16 alkanolamides or C10-C14 alkyl sulphates, which are preferably incorporated at 1%-10% levels. The C10-C14 monoethanol and diethanol amides illustrate a typical class of such suds boosters. Use of such suds boosters with high sudsing adjunct surfactants such as the amine oxides, betaines and sultaines noted above is also advantageous. If desired, water-soluble magnesium and/or calcium salts such as MgCl2, MgSO4, CaCl2 and CaSO4 can be added at levels of, typically, 0.1%-2%, to provide additional suds and to enhance grease removal performance.

**Suds Supressor.** Compounds for reducing or suppressing the formation of suds may be incorporated into the compositions of the present invention. Suds suppression can be of particular importance in the so-called "high concentration cleaning process" as described in U.S. Pat. No. 4,489,455 and 4,489,574, and in front-loading -style washing machines. A wide variety of materials may be used as suds suppressors, and suds suppressors are well known to those skilled in the art. See, for example, Kirk Othmer Encyclopedia of Chemical Technology, Third Edition, Volume 7, pages 430-447 (John Wiley & Sons, Inc., 1979). Examples of suds supressors include monocarboxylic fatty acid and soluble salts therein, high molecular weight hydrocarbons such as paraffin, fatty acid esters (e.g., fatty acid triglycerides), fatty acid esters of monovalent alcohols, aliphatic C18-C40 ketones (e.g., stearone), N-alkylated amino triazines, waxy hydrocarbons preferably having a melting point below 100 °C, silicone suds suppressors, and secondary alcohols. Suds supressors are described in U.S. Pat. No. 2,954,347; 4,265,779; 4,265,779; 3,455,839; 3,933,672; 4,652,392; 4,978,471; 4,983,316; 5,288,431; 4,639,489; 4,749,740; and 4,798,679; 4,075,118; European Patent Application No. 89307851.9; EP 150,872; and DOS 2,124,526.

For any detergent compositions to be used in automatic laundry washing machines, suds should not form to the extent that they overflow the washing machine. Suds suppressors, when utilized, are preferably present in a "suds suppressing amount. By "suds suppressing amount" is meant that the formulator of the composition can select an amount of this suds controlling agent that will sufficiently control the suds to result in a low-sudsing laundry detergent for use in automatic laundry washing machines. The compositions herein will generally comprise from 0% to 10% of suds suppressor. When utilized as suds suppressors, monocarboxylic fatty acids, and salts therein, will be present typically in amounts up to 5%, by weight, of the detergent composition. Preferably, from 0.5% to 3% of fatty monocarboxylate suds suppressor is utilized. Silicone suds suppressors are typically utilized in amounts up to 2.0%, by weight, of the detergent composition, although higher amounts may be used. Monostearyl phosphate suds suppressors are generally utilized in amounts ranging from 0.1% to 2%, by weight, of the composition. Hydrocarbon suds suppressors are typically utilized in amounts ranging from 0.01% to 5.0%, although higher levels can be used. The alcohol suds suppressors are typically used at 0.2%-3% by weight of the finished compositions.

**Pearlescent Agents.** Pearlescent agents as described in WO2011/163457 may be incorporated into the compositions of the invention.

**Perfume.** Preferably the detergent composition comprises a perfume, preferably in the range from 0.001 to 3wt%, most preferably from 0.1 to 1 wt%. Many suitable examples of perfumes are provided in the CTFA (Cosmetic, Toiletry and Fragrance Association) 1992 International Buyers Guide, published by CFTA Publications and OPD 1993 Chemicals Buyers Directory 80th Annual Edition, published by Schnell Publishing Co. It is usual for a plurality of perfume components to be present in the compositions of the invention, for example four, five, six, seven or more. In perfume mixtures preferably 15 to 25 wt% are top notes. Top notes are defined by Poucher (Journal of the Society of Cosmetic Chemists 6(2):80 [1995]). Preferred top notes include rose oxide, citrus oils, linalyl acetate, lavender, linalool, dihydromyrcenol and cis-3-hexanol.

**Packaging.** Any conventional packaging may be used and the packaging may be fully or partially transparent so that he consumer can see the colour of the product which may be provided or contributed to by the colour of the dyes essential to the invention. UV absorbing compounds may be included in some or all of the packaging.

### Process of Making Compositions

The compositions of the invention may be in any useful form, as described above. They may be made by any process chosen by the formulator, non-limiting examples of which are described in the examples and in U.S. 4,990,280; U.S. 20030087791A1; U.S. 20030087790A1; U.S. 20050003983A1; U.S. 20040048764A1; U.S. 4,762,636; U.S. 6,291,412; U.S. 20050227891A1; EP 1070115A2; U.S. 5,879,584; U.S. 5,691,297; U.S. 5,574,005; U.S. 5,569,645; U.S. 5,565,422; U.S. 5,516,448; U.S. 5,489,392; U.S. 5,486.

When in the form of a liquid, the detergents of the invention may be aqueous (typically above 2 wt% or even above 5 or 10 wt% total water, up to 90 or up to 80wt% or 70 wt% total water) or non-aqueous (typically below 2 wt% total water content). Typically the compositions of the invention will be in the form of an aqueous solution or uniform dispersion or suspension of optical brightener, DTI and optional additional adjunct materials, some of which may normally be in solid form, that have been combined with the normally liquid components of the composition, such as the liquid alcohol ethoxylate nonionic, the aqueous liquid carrier, and any other normally liquid optional ingredients. Such a solution, dispersion or suspension will be acceptably phase stable. When in the form of a liquid, the detergents of the invention preferably have viscosity from 1 to 1500 centipoises (1-1500 mPa*s), more preferably from 100 to 1000 centipoises (100-1000 mPa*s), and most preferably from 200 to 500 centipoises (200-500 mPa*s) at 20s-1 and 21°C. Viscosity can be determined by conventional methods. Viscosity may be measured using an AR 550 rheometer from TA instruments using a plate steel spindle at 40 mm diameter and a gap size of 500 µm. The high shear viscosity at 20s-1 and low shear viscosity at 0.05-1 can be obtained from a logarithmic shear rate sweep from 0.1-1 to 25-1 in 3 minutes time at 21C. The preferred rheology described therein may be achieved using internal existing structuring with detergent ingredients or by employing an external rheology modifier. More preferably the detergents, such as detergent liquid compositions have a high shear rate viscosity of from about 100 centipoise to 1500 centipoise, more preferably from 100 to 1000 cps. Unit Dose detergents, such as detergent liquid compositions have high shear rate viscosity of from 400 to 1000cps. Detergents such as laundry softening compositions typically have high shear rate viscosity of from 10 to 1000, more preferably from 10 to 800 cps, most preferably from 10 to 500 cps. Hand dishwashing compositions have high shear rate viscosity of from 300 to 4000 cps, more preferably 300 to 1000 cps.

The liquid compositions, preferably liquid detergent compositions herein can be prepared by combining the components thereof in any convenient order and by mixing, e.g., agitating, the resulting component combination to form a phase stable liquid detergent composition. In a process for preparing such compositions, a liquid matrix is formed containing at least a major proportion, or even substantially all, of the liquid components, e.g., nonionic surfactant, the non-surface active liquid carriers and other optional liquid components, with the liquid components being thoroughly admixed by imparting shear agitation to this liquid combination. For example, rapid stirring with a mechanical stirrer may usefully be employed. While shear agitation is maintained, substantially all of any anionic surfactants and the solid form ingredients can be added. Agitation of the mixture is continued, and if necessary, can be increased at this point to form a solution or a uniform dispersion of insoluble solid phase particulates within the liquid phase. After some or all of the solid-form materials have been added to this agitated mixture, particles of any enzyme material to be included, e.g., enzyme prills, are incorporated. As a variation of the composition preparation procedure hereinbefore described, one or more of the solid components may be added to the agitated mixture as a solution or slurry of particles premixed with a minor portion of one or more of the liquid components. After addition of all of the composition components, agitation of the mixture is continued for a period of time sufficient to form compositions having the requisite viscosity and phase stability characteristics. Frequently this will involve agitation for a period of from 30 to 60 minutes.

In one aspect of forming the liquid compositions, the optical brightener is first combined with one or more liquid components to form a brightener premix, and this brightener premix is added to the balance of components of the laundry detergent composition, either by sequential addition or by forming a second pre-mix comprising the remainder of the components of the composition and mixing the two pre-mixes. For example, in the methodology described above, the brightener premix may be added to the DTI and any optional additional detergent adjuncts in any order, for example at a final stage of liquid processing. In another aspect, the brightener is encapsulated prior to addition to the detergent composition, the encapsulated brightener may be suspended in a structured liquid, and the suspension is added to a composition formulation containing a substantial portion of the balance of components of the laundry detergent composition. A preferred brightener premix comprises the hydrophobic brightener and nonionic surfactant and/or solvent.

**Pouches.** In a preferred embodiment of the invention, the composition is provided in the form of a unitized dose, either tablet form or preferably in the form of a liquid/solid (optionally granules)/gel/paste held within a water-soluble film in what is known as a pouch or pod. The composition can be encapsulated in a single or multi-compartment pouch. Multi-compartment pouches are described in more detail in EP-A-2133410. When the composition is present in a multi-compartment pouch, the composition of the invention may be in one or two or more compartments, and/or the one or more compartments may compise DTI but no optical brightener which would be contained in a separate compartment. Alternatively, both DTI and optical brightner may be present in one compartment whilst additional DTI or optical brightener may be in one or more further compartments. Thus the brightener may be present in one or more compartments, optionally all compartments. In one embodiment of the invention the hydrophobic brightener and any optional additional brightener are in separate compartments. In a further embodiment of the invention the hydrophobic brightener and/or optional additional brightener are separate (contained in a different compartment) from the DTI. Shading or non-shading dyes or pigments or other aesthetics may also be used in one or more compartments. In one embodiment the composition is present in a single compartment of a multi-compartment pouch.

Suitable film for forming the pouches is soluble or dispersible in water, and preferably has a water-solubility/dispersibility of at least 50%, preferably at least 75% or even at least 95%, as measured by the method set out here after using a glass-filter with a maximum pore size of 20 microns:
50 grams ± 0.1 gram of pouch material is added in a pre-weighed 400 ml beaker and 245ml ± 1ml of distilled water is added. This is stirred vigorously on a magnetic stirrer set at 600 rpm, for 30 minutes. Then, the mixture is filtered through a folded qualitative sintered-glass filter with a pore size as defined above (max. 20 micron). The water is dried off from the collected filtrate by any conventional method, and the weight of the remaining material is determined (which is the dissolved or dispersed fraction). Then, the percentage solubility or dispersability can be calculated. Preferred film materials are polymeric materials. The film material can be obtained, for example, by casting, blow-moulding, extrusion or blown extrusion of the polymeric material, as known in the art. Preferred polymers, copolymers or derivatives thereof suitable for use as pouch material are selected from polyvinyl alcohols, polyvinyl pyrrolidone, polyalkylene oxides, acrylamide, acrylic acid, cellulose, cellulose ethers, cellulose esters, cellulose amides, polyvinyl acetates, polycarboxylic acids and salts, polyaminoacids or peptides, polyamides, polyacrylamide, copolymers of maleic/acrylic acids, polysaccharides including starch and gelatine, natural gums such as xanthum and carragum. More preferred polymers are selected from polyacrylates and water-soluble acrylate copolymers, methylcellulose, carboxymethylcellulose sodium, dextrin, ethylcellulose, hydroxyethyl cellulose, hydroxypropyl methylcellulose, maltodextrin, polymethacrylates, and most preferably selected from polyvinyl alcohols, polyvinyl alcohol copolymers and hydroxypropyl methyl cellulose (HPMC), and combinations thereof. Preferably, the level of polymer in the pouch material, for example a PVA polymer, is at least 60%. The polymer can have any weight average molecular weight, preferably from 1000 to 1,000,000, more preferably from 10,000 to 300,000 yet more preferably from 20,000 to 150,000. Mixtures of polymers can also be used as the pouch material. This can be beneficial to control the mechanical and/or dissolution properties of the compartments or pouch, depending on the application thereof and the required needs. Suitable mixtures include for example mixtures wherein one polymer has a higher water-solubility than another polymer, and/or one polymer has a higher mechanical strength than another polymer. Also suitable are mixtures of polymers having different weight average molecular weights, for example a mixture of PVA or a copolymer thereof of a weight average molecular weight of 10,000- 40,000, preferably 20,000, and of PVA or copolymer thereof, with a weight average molecular weight of 100,000 to 300,000, preferably around 150,000. Also suitable herein are polymer blend compositions, for example comprising hydrolytically degradable and water-soluble polymer blends such as polylactide and polyvinyl alcohol, obtained by mixing polylactide and polyvinyl alcohol, typically comprising 1-35% by weight polylactide and 65% to 99% by weight polyvinyl alcohol. Preferred for use herein are polymers which are from 60% to 98% hydrolysed, preferably 80% to 90% hydrolysed, to improve the dissolution characteristics of the material.

Naturally, different film material and/or films of different thickness may be employed in making the compartments of the present invention. A benefit in selecting different films is that the resulting compartments may exhibit different solubility or release characteristics.

Most preferred film materials are PVA films known under the MonoSol trade reference M8630, M8900, H8779 (as described in the Applicants co-pending applications ref 44528 and 11599) and those described in US 6 166 117 and US 6 787 512 and PVA films of corresponding solubility and deformability characteristics.

The film material herein can also comprise one or more additive ingredients. For example, it can be beneficial to add plasticisers, for example glycerol, ethylene glycol, diethyleneglycol, propylene glycol, sorbitol and mixtures thereof. Other additives include functional detergent additives to be delivered to the wash water, for example organic polymeric dispersants.

### Process for Making the Water-Soluble Pouch

The compositions of the invention in pouch form may be made using any suitable equipment and method. However the multi-compartment pouches are preferably made using the horizontal form filling process. The film is preferably wetting, more preferably heated to increase the malleability thereof. Even more preferably, the method also involves the use of a vacuum to draw the film into a suitable mould. The vacuum drawing the film into the mould can be applied for 0.2 to 5 seconds, preferably 0.3 to 3 or even more preferably 0.5 to 1.5 seconds, once the film is on the horizontal portion of the surface. This vacuum may preferably be such that it provides an under-pressure of between -100mbar to -1000mbar, or even from -200mbar to -600mbar.

The moulds, in which the pouches are made, can have any shape, length, width and depth, depending on the required dimensions of the pouches. The moulds can also vary in size and shape from one to another, if desirable. For example, it may be preferred that the volume of the final pouches is between 5 and 300ml, or even 10 and 150ml or even 20 and 100ml and that the mould sizes are adjusted accordingly.

Heat can be applied to the film, in the process commonly known as thermoforming, by any means. For example the film may be heated directly by passing it under a heating element or through hot air, prior to feeding it onto the surface or once on the surface. Alternatively it may be heated indirectly, for example by heating the surface or applying a hot item onto the film. Most preferably the film is heated using an infra red light. The film is preferably heated to a temperature of 50 to 120°C, or even 60 to 90°C. Alternatively, the film can be wetted by any mean, for example directly by spraying a wetting agent (including water, solutions of the film material or plasticizers for the film material) onto the film, prior to feeding it onto the surface or once on the surface, or indirectly by wetting the surface or by applying a wet item onto the film.

In the case of pouches comprising powders it is advantageous to pin prick the film for a number of reasons: (a) to reduce the possibility of film defects during the pouch formation, for example film defects giving rise to rupture of the film can be generated if the stretching of the film is too fast; (b) to permit the release of any gases derived from the product enclosed in the pouch, as for example oxygen formation in the case of powders containing bleach; and/or (c) to allow the continuous release of perfume. Moreover, when heat and/or wetting is used, pin pricking can be used before, during or after the use of the vacuum, preferably during or before application of the vacuum. Preferred is thus that each mould comprises one or more holes which are connected to a system which can provide a vacuum through these holes, onto the film adjacent the holes.

Once a film has been heated/wetted, it is drawn into an appropriate mould, preferably using a vacuum. The filling of the moulded film can be done by any known method for filling (moving) items. The most preferred method will depend on the product form and speed of filling required. Preferably the moulded film is filled by in-line filling techniques. The filled, open pouches are then closed, using a second film, by any suitable method. Preferably, this is also done while in horizontal position and in continuous, constant motion. Preferably the closing is done by continuously feeding a second material or film, preferably water-soluble film, over and onto the web of open pouches and then preferably sealing the first film and second film together, typically in the area between the moulds and thus between the pouches.

Preferred methods of sealing include heat sealing, solvent welding, and solvent or wet sealing. It is preferred that only the area which is to form the seal, is treated with heat or solvent. The heat or solvent can be applied by any method, preferably on the closing material, preferably only on the areas which are to form the seal. If solvent or wet sealing or welding is used, it may be preferred that heat is also applied. Preferred wet or solvent sealing/ welding methods include applying selectively solvent onto the area between the moulds, or on the closing material, by for example, spraying or printing this onto these areas, and then applying pressure onto these areas, to form the seal. Sealing rolls and belts as described above (optionally also providing heat) can be used, for example.

The formed pouches can then be cut by a cutting device. Cutting can be done using any known method. It may be preferred that the cutting is also done in continuous manner, and preferably with constant speed and preferably while in horizontal position. The cutting device can, for example, be a sharp item or a hot item, whereby in the latter case, the hot item 'burns' through the film/ sealing area.

The different compartments of a multi-compartment pouch may be made together in a side-by-side style and consecutive pouches are not cut. Alternatively, the compartments can be made separately. According to this process and preferred arrangement, the pouches are made according to the process comprising the steps of:
a) forming an first compartment (as described above);
b) forming a recess within some or all of the closed compartment formed in step (a), to generate a second moulded compartment superposed above the first compartment;
c) filling and closing the second compartments by means of a third film;
d) sealing said first, second and third films; and
e) cutting the films to produce a multi-compartment pouch.

Said recess formed in step b is preferably achieved by applying a vacuum to the compartment prepared in step a).

Alternatively the second, and optionally third, compartment(s) can be made in a separate step and then combined with the first compartment as described in our co-pending application EP 08101442.5. A particularly preferred process comprises the steps of:
a) forming a first compartment, optionally using heat and/or vacuum, using a first film on a first forming machine;
b) filling said first compartment with a first composition;
c) on a second forming machine, deforming a second film, optionally using heat and vacuum, to make a second and optionally third moulded compartment;
d) filling the second and optionally third compartments;
e) sealing the second and optionally third compartment using a third film;
f) placing the sealed second and optionally third compartments onto the first compartment;
g) sealing the first, second and optionally third compartments; and
h) cutting the films to produce a multi-compartment pouch

The first and second forming machines are selected based on their suitability to perform the above process. The first forming machine is preferably a horizontal forming machine. The second forming machine is preferably a rotary drum forming machine, preferably located above the first forming machine.

It will be understood moreover that by the use of appropriate feed stations, it is possible to manufacture multi-compartment pouches incorporating a number of different or distinctive compositions and/or different or distinctive liquid, gel or paste compositions.

**Solid Form.** As noted previously, the detergent compositions may be in a solid form. Suitable solid forms include tablets and particulate forms, for example, granular particles, flakes or sheets. Various techniques for forming detergent compositions in such solid forms are well known in the art and may be used herein. In one aspect, for example when the composition is in the form of a granular particle, the hydrophobic brightener is provided in particulate form, optionally including additional but not all components of the laundry detergent composition. The hydrophobic brightener particulate is combined with one or more additional particulates containing a balance of components of the laundry detergent composition. Further, the hydrophobic brightener, optionally including additional but not all components of the laundry detergent composition, may be provided in an encapsulated form, and the hydrophobic brightener encapsulate is combined with particulates containing a substantial balance of components of the laundry detergent composition. Suitable pre-mix particles for incorporation of hydrophobic brightener into detergents of the invention are described for example in WO2010/084039, WO2007/039042, WO2010/022775, WO2009/132870, WO2009/087033, WO2007/006357, WO2007/039042, WO2007/096052, WO2011/020991, WO2006/053598, WO2003/018740 and WO2003/018738, wherein the hydrophobic brightener is used in place of or in addition to the (fabric shading) dye.

**Method of Use.** The compositions of this invention, typically prepared as hereinbefore described, can be used to form aqueous washing/treatment solutions for use in the laundering/treatment of fabrics. Generally, an effective amount of such a composition is added to water, for example in a conventional fabric automatic washing machine, to form such aqueous laundering solutions. The aqueous washing solution so formed is then contacted, typically under agitation, with the fabrics to be laundered/treated therewith. An effective amount of the detergent composition herein added to water to form aqueous laundering solutions can comprise amounts sufficient to form from 500 to 25,000 ppm, or from 500 to 15,000 ppm of composition in aqueous washing solution, or from 1,000 to 3,000 ppm of the detergent compositions herein will be provided in aqueous washing solution.

Typically, the wash liquor is formed by contacting the detergent with wash water in such an amount so that the concentration of the detergent in the wash liquor is from above 0g/l to 5g/l, or from 1g/l, and to 4.5g/l, or to 4.0g/l, or to 3.5g/l, or to 3.0g/l, or to 2.5g/l, or even to 2.0g/l, or even to 1.5g/l. The method of laundering fabric or textile may be carried out in a top-loading or front-loading automatic washing machine, or can be used in a hand-wash laundry application. In these applications, the wash liquor formed and concentration of laundry detergent composition in the wash liquor is that of the main wash cycle. Any input of water during any optional rinsing step(s) is not included when determining the volume of the wash liquor.

The wash liquor may comprise 40 litres or less of water, or 30 litres or less, or 20 litres or less, or 10 litres or less, or 8 litres or less, or even 6 litres or less of water. The wash liquor may comprise from above 0 to 15 litres, or from 2 litres, and to 12 litres, or even to 8 litres of water. Typically from 0.01kg to 2kg of fabric per litre of wash liquor is dosed into said wash liquor. Typically from 0.01kg, or from 0.05kg, or from 0.07kg, or from 0.10kg, or from 0.15kg, or from 0.20kg, or from 0.25kg fabric per litre of wash liquor is dosed into said wash liquor. Optionally, 50g or less, or 45g or less, or 40g or less, or 35g or less, or 30g or less, or 25g or less, or 20g or less, or even 15g or less, or even 10g or less of the composition is contacted to water to form the wash liquor. Such compositions are typically employed at concentrations of from 500 ppm to 15,000 ppm in solution. When the wash solvent is water, the water temperature typically ranges from 5 °C to 90 °C and, when the situs comprises a fabric, the water to fabric ratio is typically from 1:1 to 30:1. Typically the wash liquor comprising the detergent of the invention has a pH of from 3 to 11.5.

In one aspect, such method comprises the steps of optionally washing and/or rinsing said surface or fabric, contacting said surface or fabric with any composition disclosed in this specification then optionally washing and/or rinsing said surface or fabric is disclosed, with an optional drying step.

Drying of such surfaces or fabrics may be accomplished by any one of the common means employed either in domestic or industrial settings: machine drying or open-air drying. The fabric may comprise any fabric capable of being laundered in normal consumer or institutional use conditions, and the invention is particularly suitable for synthetic textiles such as polyester and nylon and especially for treatment of mixed fabrics and/or fibres comprising synthetic and cellulosic fabrics and/or fibres. As examples of synthetic fabrics are polyester, nylon, these may be present in mixtures with cellulosic fibres, for example, polycotton fabrics. The solution typically has a pH of from 7 to 11, more usually 8 to 10.5. The compositions are typically employed at concentrations from 500 ppm to 5,000 ppm in solution. The water temperatures typically range from 5 °C to 90 °C. The water to fabric ratio is typically from 1:1 30:1.

The optical brighteners, dye transfer inhibitors and adjunct ingredients in the compositions of this invention may be incorporated into the composition as the product of the organic synthesis generating such components, either with or without an intermediate purification step. Where there is no purification step, commonly the mixture used will comprise the desired component or mixtures thereof (and percentages given herein relate to the weight percent of the component itself unless otherwise specified) and in addition unreacted starting materials and impurities formed from side reactions and/or incomplete reaction. For example, for an ethoxylated or substituted component, the mixture will likely comprise different degrees of ethoxylation/substitution.

### Examples

### Example 1

The following test formulations were prepared:

| Granular Detergent Formulation A | |
|---|---|
| Raw material | Wt% |
| Linear alkyl benzene sulphate | 22 |
| Nonionic surfactant | 0.5 |
| Sodium tripolyphosphate | 23 |
| Sodium silicate | 13 |
| Sodium carbonate | 7 |
| Sodium sulphate | 25 |
| Optical brightener | 0.1 |
| Direct violet 9 | 0.0003 |
| Solvent violet 13 | 0.0014 |
| Misc, minors, water | to 100 |

### Composition of the Invention -Detergent Formulation A + 0.1% (w/w) Optiblanc ® SPL10

### Comparative Composition - Detergent Formulation A

Un-brightened 100% nylon (T-361, ex CFT) fabric samples were washed in a 2g/l solution of granular Detergent Formulation A with a fabric ballast such that the total fabric to liquor ratio was 25:1. The washing step was carried out in a Tergotometer for 20 minutes followed by a 5 minute rinse. The water hardness was 0.15 g/l (8.8 USgpg) and testing was completed at 20°C. After the wash and rinse steps, the fabric was dried under ambient conditions. The process was repeated 4 times. Following completion the nylon fabric was measured for the colour indicator values (L*, a*, b*) via Gretag Macbeth ColorEye 7000A Solid State Reflectance Spectrophotometer (UVD65, 10°Obs). The average results for the 5 nylon samples were calculated and statistical analysis was carried out in Microsoft Excel 2007. The CIE Whiteness Index (WI CIE) was calculated from the L*, a* and b* values.

The results for Whiteness Index, difference in Whiteness Index (ΔWI CIE) between the composition of the invention and the comparative composition and statistical data are given in the table below.

| Composition | WI CIE | ΔWI CIE | Std Dev | Student's T-Test (P Value) |
|---|---|---|---|---|
| Comparative | 88.14 | --- | 3.00 | --- |
| Invention | 109.97 | +21.83 | 1.78 | 0.000 |

It can be seen that the inventive composition provides a significant, measurable whitening benefit when delivered in a hueing dye containing detergent product. This effect is statistically significant both in accordance with the standard deviation and it is shown with >99% confidence (P Value <0.01) there is a significant difference between the inventive and comparative compositions. Thus, by using 4-Methyl-7-(diethylamino) coumarin optical brightening agent (aka Optiblanc SPL10) in a hueing dye containing detergent formulation the whitening profile is significantly increased.

### Examples 2-8

Granular laundry detergent compositions for hand washing or washing machines, typically top-loading washing machines.

| | 2 Wt% | 3 (wt %) | 4 (wt %) | 5 (wt %) | 6 (wt %) | 7 (wt %) | 8 (wt %) |
|---|---|---|---|---|---|---|---|
| Linear alkylbenzenesulfonate | 15 | 20 | 22 | 20 | 15 | 19.5 | 20 |
| C₁₂₋₁₄ Dimethylhydroxyethyl ammonium chloride | 0 | 0.7 | 0.2 | 1 | 0.6 | 0.0 | 0 |
| AE3S | 1.5 | 0.9 | 1 | 0.9 | 0.0 | 0.4 | 0.9 |
| AE7 | 1 | 0.0 | 0.0 | 0.0 | 1 | 0.1 | 3 |
| Sodium tripolyphosphate | 0 | 5 | 0.0 | 4 | 9 | 2 | 0.0 |
| Zeolite A | 1 | 0.0 | 1 | 0.0 | 1 | 4 | 1 |
| 1.6R Silicate (SiO₂:Na₂O at ratio 1.6:1) | 7 | 7 | 5 | 2 | 3 | 3 | 5 |
| Sodium carbonate | 23 | 25 | 20 | 25 | 17 | 18 | 19 |
| Polyacrylate MW 4500 | 1.5 | 1 | 0.6 | 1 | 1 | 1.5 | 1 |
| Random graft copolymer¹ | 0.1 | 0.1 | 0.2 | 0.0 | 0.0 | 0.05 | 0.0 |
| Carboxymethyl cellulose | 0.5 | 1 | 0.3 | 1 | 1 | 1 | 1 |
| Protease-(Savinase®32.89mg active/g) | 0.1 | 0.1 | 0.1 | 0.1 | 0.1 | | 0.1 |
| Amylase-Natalase®(8.65mg active /g) | 0.1 | 0.1 | 0.0 | 0.1 | 0.0 | 0.1 | 0.1 |
| Lipase - Lipex® (18 mg active /g) | 0.03 | 0.03 | 0.07 | 0.3 | 0.1 | 0.07 | 0.4 |
| Optical Brightener 1 | 0.2 | 0.2 | 0.001 | 0.3 | 0.65 | 0.05 | 0.0009 |
| Optical Brightener 2 | 0.02 | 0.06 | 0.0 | 0.65 | 0.18 | 0.2 | 0.06 |
| Optical Brightener 3 | 0.02 | 0.1 | 0.06 | 0.05 | 0.0 | 0.03 | 0.3 |
| DTPA | 0.5 | 0.6 | 0.8 | 0.6 | 0.25 | 0.6 | 0.6 |
| DTI 1 | 0.2 | 0.32 | 0 | 0.15 | 0.0 | 0.1 | 0 |
| DTI 2 | 0 | 0.32 | 0 | 0.3 | 0.3 | 0 | 0 |
| MgSO₄ | 1 | 1 | 1 | 1 | 0.5 | 1 | 1 |
| Sodium Percarbonate | 3 | 0.0 | 5.2 | 0.1 | 0.0 | 0.0 | 0.0 |
| Sodium Perborate Monohydrate | 0 | 4.4 | 0.0 | 3.85 | 2.09 | 0.78 | 3.63 |
| NOBS | 0 | 1.9 | 0.0 | 1.66 | 0.0 | 0.33 | 0.75 |
| TAED | 1 | 0.58 | 1.2 | 0.51 | 0.0 | 0.015 | 0.28 |
| Sulphonated zinc phthalocyanine | 0.003 | 0.0030 | 0.0 | 0.0012 | 0.0030 | 0.0021 | 0.0 |
| S-ACMC | 0 | 0.1 | 0.0 | 0.0 | 0.0 | 0.06 | 0.0 |
| Direct Violet Dye (DV9,DV 28, DV99 or DV66) | 0.0001 | 0.0003 | | 0.0003 | 0.0001 | 0.0001 | |
| Acid Dye (e.g. Acid Violet 50, Acid Blue 80) | 0.0001 | | 0.0003 | | | | 0.0001 |
| Solvent dye (e.g. Solvent Violet 13) | 0.0001 | | | 0.0002 | | | |
| Violet DD | 0.0001 | | | | | 0.0003 | |
| Alkoxylated azo dye with anionic group | 0.001 | | | | 0.0004 | | 0.001 |
| Sulfate/Moisture | | Balance | | | | | |

### Examples 9-14

Granular laundry detergent compositions typically for front-loading automatic washing machines.

| | 9 (wt%) | 10 (wt%) | 11 (wt%) | 12 (wt%) | 13 (wt%) | 14 (wt%) |
|---|---|---|---|---|---|---|
| Linear alkylbenzenesulfonate | 8 | 7.1 | 7 | 6.5 | 7.5 | 7.5 |
| AE3S | 0 | 4.8 | 1.0 | 5.2 | 4 | 4 |
| C12-14 Alkylsulfate | 1 | 0 | 1 | 0 | 0 | 0 |
| AE7 | 2.2 | 0 | 2.2 | 0 | 0 | 0 |
| C₁₀₋₁₂Dimethyl hydroxyethylammonium chloride | 0.75 | 0.94 | 0.98 | 0.98 | 0 | 0 |
| Crystalline layered silicate (δ-Na₂Si₂O₅) | 4.1 | 0 | 4.8 | 0 | 0 | 0 |
| Zeolite A | 5 | 0 | 5 | 0 | 2 | 2 |
| Citric Acid | 3 | 5 | 3 | 4 | 2.5 | 3 |
| Sodium Carbonate | 15 | 20 | 14 | 20 | 23 | 23 |
| Silicate 2R (SiO₂:Na₂O at ratio 2:1) | 0.08 | 0 | 0.11 | 0 | 0 | 0 |
| Optical Brightener 1 | 0.2 | 0.25 | 0.05 | 0.006 | 0.1 | 0.02 |
| Optical Brightener 2 | 0.05 | 0.0 | 0.25 | 0.2 | 0.005 | 0.08 |
| Optical Brightener 3 | 0.22 | 0.06 | 0.04 | 0.15 | 0.0 | 0.05 |
| Direct Violet 9 (active) | 0.0005 | 0.0002 | 0.0001 | 0.0001 | 0.001 | 0.0001 |
| Alkoxylated dye with anionic group | 0.0003 | - | - | - | - | 0.0001 |
| DTI 1 | 0.08 | 0.0 | 0.04 | 0.0 | 0.1 | 0.01 |
| DTI 2 | 0.08 | 0.08 | 0.04 | 0 | 0.1 | 0.02 |
| Soil release agent | 0.75 | 0.72 | 0.71 | 0.72 | 0 | 0 |
| AcrylicAcid/MaleicAcid Copolymer | 1.1 | 3.7 | 1.0 | 3.7 | 2.6 | 3.8 |
| Carboxymethylcellulose | 0.15 | 1.4 | 0.2 | 1.4 | 1 | 0.5 |
| Protease-Purafect®(84mg active/g) | 0.2 | 0.2 | 0.3 | 0.15 | 0.12 | 0.13 |
| Amylase-StainzymePlus®(20 mg active/g) | 0.2 | 0.15 | 0.2 | 0.3 | 0.15 | 0.15 |
| Lipase-Lipex®(18.00mg active/g) | 0.05 | 0.15 | 0.1 | 0 | 0 | 0 |
| Amylase-Natalase®(8.65mg active/g) | 0.1 | 0.2 | 0 | 0 | 0.15 | 0.15 |
| Cellulase-Celluclean ™(15.6mg active/g) | 0 | 0 | 0 | 0 | 0.1 | 0.1 |
| TAED | 3.6 | 4.0 | 3.6 | 4.0 | 2.2 | 1.4 |
| Percarbonate | 13 | 13.2 | 13 | 13.2 | 16 | 14 |
| Na salt of Ethylenediamine-N,N'-disuccinic acid,(S,S)isomer (EDDS) | 0.2 | 0.2 | 0.2 | 0.2 | 0.2 | 0.2 |
| Hydroxyethanediphosphonate (HEDP) | 0.2 | 0.2 | 0.2 | 0.2 | 0.2 | 0.2 |
| MgSO₄ | 0.42 | 0.42 | 0.42 | 0.42 | 0.4 | 0.4 |
| Perfume | 0.5 | 0.6 | 0.5 | 0.6 | 0.6 | 0.6 |
| Suds suppressor agglomerate | 0.05 | 0.1 | 0.05 | 0.1 | 0.06 | 0.05 |
| Soap | 0.45 | 0.45 | 0.45 | 0.45 | 0 | 0 |
| Sulphonatedzincphthalocyanine (active) | 0.0007 | 0.0012 | 0.0007 | 0 | 0 | 0 |
| S-ACMC | 0.01 | 0.01 | 0 | 0.01 | 0 | 0 |
| Sulfate/ Water & Miscellaneous | Balance | | | | | |

### Examples 15-21 Heavy Duty Liquid laundry detergent compositions

| | 15 (wt%) | 16 (wt%) | 17 (wt%) | 18 (wt%) | 19 (wt%) | 20 (wt%) | 21 (wt%) |
|---|---|---|---|---|---|---|---|
| AES C₁₂₋₁₅ alkyl ethoxy (1.8) sulfate | 11 | 10 | 4 | 6.3 | 0 | 0 | 0 |
| AE3S | 0 | 0 | 0 | 0 | 2.4 | 0 | 0 |
| Linear alkyl benzene sulfonate/sulfonic acid | 1.4 | 4 | 8 | 3.3 | 5 | 8 | 19 |
| HSAS | 3 | 5.1 | 3 | 0 | 0 | 0 | 0 |
| Optical Brightener 1 | 1.0 | 0.8 | 0.1 | 0.3 | 0.05 | 0.5 | 0.001 |
| Optical Brightener 2 | 0.001 | 0.0 | 0.3 | 0.05 | 0.5 | 1.0 | 0.0 |
| Violet DD | 0.001 | 0.0005 | 0.001 | 0.002 | - | 0.000 5 | - |
| Dye formula 5 from descpn | 0.000 4 | 0.0005 | - | - | 0.000 3 | - | 0.001 |
| Sodium formate | 1.6 | 0.09 | 1.2 | 0.04 | 1.6 | 1.2 | 0.2 |
| DTI 1 | 0.32 | 0 | 0.0 | 0.6 | 0.1 | 0.6 | 0.01 |
| DTI 2 | 0.32 | 0 | 0.6 | 0.6 | 0.05 | 0.4 | 0.2 |
| Sodium hydroxide | 2.3 | 3.8 | 1.7 | 1.9 | 1.7 | 2.5 | 2.3 |
| Monoethanolamine | 1.4 | 1.49 | 1.0 | 0.7 | 0 | 0 | 00 |
| Diethylene glycol | 5.5 | 0.0 | 4.1 | 0.0 | 0 | 0 | 0 |
| AE9 | 0.4 | 0.6 | 0.3 | 0.3 | 0 | 0 | 0 |
| AE8 | 0 | 0 | 0 | 0 | 0 | 0 | 20.0 |
| AE7 | 0 | 0 | 0 | 0 | 2.4 | 6 | 0 |
| Chelant (HEDP) | 0.15 | 0.15 | 0.11 | 0.07 | 0.5 | 0.11 | 0.8 |
| Citric Acid | 2.5 | 3.96 | 1.88 | 1.98 | 0.9 | 2.5 | 0.6 |
| C₁₂₋₁₄ dimethyl Amine Oxide | 0.3 | 0.73 | 0.23 | 0.37 | 0 | 0 | 0 |
| C₁₂₋₁₈ Fatty Acid | 0.8 | 1.9 | 0.6 | 0.99 | 1.2 | 0 | 15.0 |
| 4- formyl-phenylboronic acid | 0 | 0 | 0 | 0 | 0.05 | 0.02 | 0.01 |
| Borax | 1.43 | 1.5 | 1.1 | 0.75 | 0 | 1.07 | 0 |
| Ethanol | 1.54 | 1.77 | 1.15 | 0.89 | 0 | 3 | 7 |
| A compound having the following general structure: bis((C₂H₅O)(C₂H₄O)n)(CH₃ )-N⁺-CₓH₂ₓ-N⁺-(CH₃)-bis((C₂H₅O)(C₂H₄O)n), | | 0 | 0 | 0 | 0 | 0 | |
| wherein n = from 20 to 30, and x = from 3 to 8, or sulphated or sulphonated variants thereof | 0.1 | | | | | | 2.0 |
| Ethoxylated (EO₁₅) tetraethylene pentamine | 0.3 | 0.33 | 0.23 | 0.17 | 0.0 | 0.0 | 0 |
| Ethoxylated Polyethylenimine ² | 0 | 0 | 0 | 0 | 0 | 0 | 0.8 |
| Ethoxylated hexamethylene diamine | 0.8 | 0.81 | 0.6 | 0.4 | 1 | 1 | |
| 1,2-Propanediol | 0.0 | 6.6 | 0.0 | 3.3 | 0.5 | 2 | 8.0 |
| Hydrogenated castor oil derivative structurant | 0.1 | 0 | 0 | 0 | 0 | 0 | 0.1 |
| Perfume | 1.6 | 1.1 | 1.0 | 0.8 | 0.9 | 1.5 | 1.6 |
| Core Shell Melamine-formaldehyde encapsulate of perfume | 0.10 | 0.05 | 0.01 | 0.02 | 0.1 | 0.05 | 0.1 |
| Protease: (Purafect Prime®, 40.6 mg active/g)) | 0.8 | 0.6 | 0.7 | 0.9 | 0.7 | 0.6 | 1.5 |
| Mannanase: Mannaway® (25 mg active/g) | 0.07 | 0.05 | 0.045 | 0.06 | 0.04 | 0.045 | 0.1 |
| Amylase: Stainzyme® (15 mg active/g) | 0.3 | 0 | 0.3 | 0.1 | 0 | 0.4 | 0.1 |
| Amylase: Natalase® (29 mg active/g) | 0 | 0.2 | 0.1 | 0.15 | 0.07 | 0 | 0.1 |
| Cellulase: Xyloglucanase (Whitezyme®, 20mg active/g) | 0.2 | 0.1 | 0 | 0 | 0.05 | 0.05 | 0.2 |
| Lipase: Lipex® (18 mg active/g) | 0.4 | 0.2 | 0.3 | 0.1 | 0.2 | 0 | 0 |
| *Water, dyes & minors | Balance | | | | | | |
| pH | 8.2 | | | | | | |

| | | | | | | | |
|---|---|---|---|---|---|---|---|
| * Based on total cleaning and/or treatment composition weight, a total of no more than 12% water | | | | | | | |

### Examples 22 to 26 Unit Dose Compositions

This Example provides various formulations for unit dose laundry detergents. Such unit dose formulations can comprise one or multiple compartments.

| | 22 | 23 | 24 | 25 | 26 |
|---|---|---|---|---|---|
| Alkylbenzene sulfonic acid C 11-13, 23.5% 2-phenyl isomer | 14.5 | 14.5 | 14.5 | 14.5 | 14.5 |
| C₁₂₋₁₄ alkyl ethoxy 3 sulfate | 7.5 | 7.5 | 7.5 | 7.5 | 7.5 |
| C₁₂₋₁₄ alkyl 7-ethoxylate | 13.0 | 13.0 | 13.0 | 13.0 | 13.0 |
| Citric Acid | 0.6 | 0.6 | 0.6 | 0.6 | 0.6 |
| Fatty Acid | 14.8 | 14.8 | 14.8 | 14.8 | 14.8 |
| Ethoxylated Polyethylenimine¹ | 4.0 | 4.0 | 4.0 | 4.0 | 4.0 |
| Hydroxyethane diphosphonic acid | 1.2 | 1.2 | 1.2 | 1.2 | 1.2 |
| Optical Brightener 1 | 0.2 | 0.25 | 0.01 | 0.005 | 0.5 |
| Optical Brightener 2 | 0.2 | 0 | 0.25 | 0.03 | 0.01 |
| Dye formula 6 from description | 0.0018 | 0.0009 | 0.0003 | 0.0005 | 0.001 |
| P-diol | 15.8 | 13.8 | 13.8 | 13.8 | 13.8 |
| DTI 1 | 0.1 | 0 | 0.2 | 0.001 | 0.0 |
| DTI 2 | 0 | 0 | 0.2 | 0.25 | 0.0 |
| Glycerol | 6.1 | 6.1 | 6.1 | 6.1 | 6.1 |
| MEA | 8.0 | 8.0 | 8.0 | 8.0 | 8.0 |
| TIPA | - | - | 2.0 | - | - |
| TEA | - | 2.0 | - | - | - |
| Cumene sulphonate | - | - | - | - | 2.0 |
| Protease: (Purafect Prime®, 40.6 mg active/g) | 0.8 | 0.6 | 0.07 | 1.0 | 1.5 |
| Mannanase: Mannaway® (25 mg active/g) | 0.07 | 0.05 | 0.045 | 0.1 | 0.005 |
| Amylase: Stainzyme® (15 mg active/g) | 0.2 | 0.11 | 0.3 | 0.5 | 0.05 |
| Amylase: Natalase® (29 mg active/g) | 0.11 | 0.2 | 0.1 | 0.0 | 0.5 |
| cyclohexyl dimethanol | - | - | - | 2.0 | - |
| Water | 10 | 10 | 10 | 10 | 10 |
| Structurant | 0.14 | 0.14 | 0.14 | 0.14 | 0.14 |
| Perfume | 1.9 | 1.9 | 1.9 | 1.9 | 1.9 |
| Buffers (monoethanolamine) | To pH 8.0 | | | | |
| Solvents (1,2 propanediol, ethanol) | To 100% | | | | |
| pH | 7.5-8.2 | | | | |

### Example 27 Multiple Compartment Unit Dose Compositions

In these examples the unit dose has three compartments, but similar compositions can be made with two, four or five compartments. The film used to encapsulate the compartments is polyvinyl alcohol.

| Base Composition | 27 | 28 | 29 | 30 |
|---|---|---|---|---|
| Ingredients % | | | | |
| Glycerol | 5.3 | 5.0 | 5.0 | 4.2 |
| 1,2-propanediol | 10.0 | 15.3 | 17.5 | 16.4 |
| Citric Acid | 0.5 | 0.7 | 0.6 | 0.5 |
| Monoethanolamine | 10.0 | 8.1 | 8.4 | 7.6 |
| Caustic soda | - | - | - | - |
| Hydroxyethane diphosphonic acid | 1.1 | 2.0 | 0.6 | 1.5 |
| Polyethylene glycol | 0 | 0 | 2.5 | 3.0 |
| Potassium sulfite | 0.2 | 0.3 | 0.5 | 0.7 |
| Nonionic Marlipal C24EO₇ | 20.1 | 14.3 | 13.0 | 18.6 |
| HLAS | 24.6 | 18.4 | 17.0 | 14.8 |
| Enzymes: protease, amylase, mannanase, lipase, cellulase and/or pectate lyase | 1.5 | 1.5 | 1.0 | 0.4 |
| Optical Brightener 1 | 0.2 | 0.25 | 0.01 | 0.005 |
| Optical Brightener 3 | 0.18 | 0.09 | 0.3 | 0.005 |
| Violet DD | 0.0003 | 0.0001 | 0.0001 | 0.0005 |
| DTI 1 | 0.1 | 0 | 0.2 | 0.0 |
| DTI 2 | 0 | 0.1 | 0.2 | 0.0 |
| C12-15 Fatty acid | 16.4 | 6.0 | 11.0 | 13.0 |
| bis((C₂H₅O)(C₂H₄O)n)(CH₃)-N⁺-CₓH_{2X}-N⁺-(CH₃)-bis((C₂H₅O)(C₂H₄O)n), wherein n = from 20 to 30, and x = from 3 to 8, or sulphated or sulphonated variants thereof | 2.9 | 0.1 | 0 | 0 |
| Polyethyleneimine ethoxylate PEI600 E20 | 1.1 | 5.1 | 2.5 | 4.2 |
| Cationic cellulose polymer | 0 | 0 | 0.3 | 0.5 |
| Random graft copolymer | 0 | 1.5 | 0.3 | 0.2 |
| MgCl₂ | 0.2 | 0.2 | 0.1 | 0.3 |
| Structurant | 0.2 | 0.12 | 0.2 | 0.2 |
| Perfume (may include perfume microcapsules) | 0.1 | 0.3 | 0.01 | 0.05 |
| Solvents (1,2 propanediol, ethanol) and optional aesthetics | To 100% | To 100% | To 100% | To 100% |
| pH | 7.0-8.2 | | | |

| Composition | 31 | | | | 32 | | |
|---|---|---|---|---|---|---|---|
| Compartment | A | B | C | | A | B | C |
| Volume of each compartment | 40 ml | 5 ml | 5 ml | | 40 ml | 5 ml | 5 ml |
| Active material in Wt.% | | | | | | | |
| Perfume | 1.6 | 1.6 | 1.6 | | 1.6 | 1.6 | 1.6 |
| Direct Violet 9 | 0 | 0.00006 | 0 | | 0 | 0 | 0.0004 |
| TiO2 | - | - | - | | - | 0.1 | - |
| Sodium Sulfite | 0.4 | 0.4 | 0.4 | | 0.3 | 0.3 | 0.3 |
| Acusol 305, Rohm&Haas | - | | | | 2 | - | - |
| Hydrogenated castor oil | 0.14 | 0.14 | 0.14 | | 0.14 | 0.14 | 0.14 |
| Base Composition 27, 28, 29 or 30 | Add to 100% | Add to 100% | Add to 100% | | Add to 100% | Add to 100% | Add to 100% |

| Composition | 33 | | | | 34 | | |
|---|---|---|---|---|---|---|---|
| Compartment | A | B | C | | A | B | C |
| Volume of each compartment | 40 ml | 5 ml | 5 ml | | 40 ml | 5 ml | 5 ml |

| Active material in Wt.% | | | | | | | |
|---|---|---|---|---|---|---|---|
| Perfume | 1.6 | 1.6 | 1.6 | | 1.6 | 1.6 | 1.6 |
| Violet DD | 0 | 0 | 0.0005 | | 0.001 | 0 | 0 |
| TiO2 | 0.1 | - | - | | - | 0.1 | - |
| Sodium Sulfite | 0.4 | 0.4 | 0.4 | | 0.3 | 0.3 | 0.3 |
| Acusol 305, Rohm&Haas | 1.2 | | | | 2 | - | - |
| Hydrogenated castor oil | 0.14 | 0.14 | 0.14 | | 0.14 | 0.14 | 0.14 |
| Base Composition 27, 28, 29, 30 | Add to 100% | Add to 100% | Add to 100% | | Add to 100% | Add to 100% | Add to 100% |

### Example 35

### Bleach & Laundry Additive Detergent Formulations

| Ingredients | A | B | C | D | E | F |
|---|---|---|---|---|---|---|
| AES | 11.3 | 6.0 | 15.4 | 16.0 | 12.0 | 10.0 |
| LAS | 25.6 | 12.0 | 4.6 | - | - | 26.1 |
| MEA-HSAS | - | - | - | 3.5 | - | - |
| DTPA: Diethylene triamine pentaacetic acid | 0.51 | - | 1.5 | - | - | 2.6 |
| 4,5-Dihydroxy-1,3-benzenedisulfonic acid disodium salt | 1.82 | - | - | - | - | 1.4 |
| 1,2-propandiol | - | 10 | - | - | - | 15 |
| Copolymer of dimethylterephthalate, 1,2-propylene glycol, methyl capped PEG | 2.0 | | | | | |
| Poly(ethyleneimine) ethoxylated, PEI600 E20 | | 1.8 | | | | |
| Acrylic acid/maleic acid copolymer | | | 2.9 | | | |
| Acusol 880 (Hydrophobically Modified Non-Ionic Polyol) | | | | 2.0 | 1.8 | 2.9 |
| Protease: (Purafect Prime®, 40.6 mg active/g) | 0.8 | 0.6 | - | 0.5 | - | 1.0 |
| Mannanase: Mannaway® (25 mg active/g) | 0.07 | 0.05 | - | - | 0.1 | 0.1 |
| Amylase: Stainzyme® (15 mg active/g) | 0.2 | 0.11 | - | - | - | 0.02 |
| Perfume | - | 0.2 | 0.03 | 0.17 | - | 0.15 |
| Optical Brightener 1 | 0.2 | 0.25 | 0.01 | 0.5 | 0.35 | 1.0 |
| Optical Brightener 2 | 0.2 | 0 | 0.25 | 0.5 | 1.0 | 0.5 |
| Violet DD | 0.0018 | 0.0009 | 0.0003 | - | 0.0018 | 0.0 |
| Alkoxylated azo dye with anionic group | - | - | - | 0.0015 | - | - |
| Direct Violet 9 | 0.0003 | - | - | 0.0015 | - | 0.002 |
| DTI 1 | 0.1 | 0 | 0.2 | 0.0 | 0 | 0.5 |
| DTI 2 | 0 | 0.0 | 0.2 | 0.005 | 0 | 0.1 |
| water, other optional agents/components * | to 100% balance | to 100% balance | to 100% balance | to 100% balance | to 100% balance | to 100% balance |

| | | | | | | |
|---|---|---|---|---|---|---|
| *Other optional agents/components include suds suppressors, structuring agents such as those based on Hydrogenated Castor Oil (preferably Hydrogenated Castor Oil, Anionic Premix), solvents and/or Mica pearlescent aesthetic enhancer. | | | | | | |

### Raw Materials and Notes For Composition Examples

Optical Brightener 1 is any of examples 1 to 3 from Table 1.
Optical Brightener 2 is any of examples 4 to 6 from Table 1.
Optical Brightener 3 is a hydrophilic brightener, for example disodium 4,4'-bis(2-sulphostyry)biphenyl (such as Tinopal® CBS-X), disodium 4,4'-bis(4-anilino-6-morpholino-triazin-2-yl)amino) stilbene-2:2'-disulfonate (such as Tinopal® AMS), and/or disodium 4,4"-bis[(4,6-di-anilino-s-triazin-2-yl)-amino]-2,2'-stilbenedisulfonate.
DTI 1 is poly(4-vinylpyridine-1-oxide) (such as Chromabond S-403E®),
DTI 2 is poly(1-vinylpyrrolidone-co-1-vinylimidazole) (such as Sokalan HP56®).
LAS is linear alkylbenzenesulfonate having an average aliphatic carbon chain length C₉-C₁₅ (HLAS is acid form).
C₁₂₋₁₄ Dimethylhydroxyethyl ammonium chloride
AE3S is C₁₂₋₁₅ alkyl ethoxy (with average ethoxylation degree 3) sulfate
AE7 is C₁₂₋₁₅ alcohol ethoxylate, with an average degree of ethoxylation of 7
AES is C₁₀₋₁₈ alkyl ethoxy sulfate (with average ethoxylation degree from 1.5 to 9)
AE9 is C₁₂₋₁₃ alcohol ethoxylate, with an average degree of ethoxylation of 9
Polyacrylate MW 4500 is supplied by BASF, Ludwigshafen, Germany
Carboxymethyl cellulose is Finnfix® V
Suitable chelants are, for example, diethylenetetraamine pentaacetic acid (DTPA) or Hydroxyethane di phosphonate (HEDP)
Savinase®, Natalase®, Stainzyme®, Lipex®, Celluclean™, Mannaway® and Whitezyme® are all products of Novozymes, Bagsvaerd, Denmark.
Proteases may be supplied by Genencor International, Palo Alto, California, USA (e.g. Purafect Prime®) or by Novozymes, Bagsvaerd, Denmark (e.g. Liquanase®, Coronase®).
NOBS is sodium nonanoyloxybenzenesulfonate
TAED is tetraacetylethylenediamine
S-ACMC is carboxymethylcellulose conjugated with C.I. Reactive Blue 19
Soil release agent is Repel-o-tex® PF
Acrylic Acid/Maleic Acid Copolymer has m wt 70,000 and acrylate:maleate ratio 70:30
Na salt of Ethylenediamine-N,N'-disuccinic acid, (S,S) isomer (EDDS)
HEDP is Hydroxyethane di phosphonate (HEDP)
HSAS is mid-branched alkyl sulfate as disclosed in US 6,020,303 and US 6,060,443
Random graft copolymer is a polyvinyl acetate (PVA) grafted polyethylene oxide (PO) copolymer having a PO backbone and multiple PVA side chains with m wt 6000 and weight ratio of PO:PVA 40:60 and no more than 1 grafting point per 50 ethylene oxide units.
Ethoxylated polyethyleneimine is polyethyleneimine (MW = 600) with 20 ethoxylate groups per -NH.
Cationic cellulose polymer is LK400, LR400 and/or JR30M from Amerchol Corporation Alkoxylated thiophene azo dye (Violet DD) from Milliken Company.
Alkoxylated azo dye with anionic group, as described in WO2012/054835.
Note: all enzyme levels are expressed as % enzyme raw material

## Claims

1. A fabric treatment composition comprising from 0.0001 to 0.1 wt% fabric shading dye and from 0.0001 to 10 wt% an optical brightener having a ClogP from 1 to 50, wherein the optical brightener is a coumarinic brightener selected from compounds of Formula I 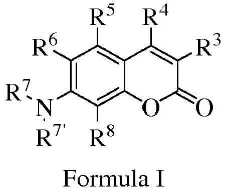 wherein R³ is selected from the group consisting of H, C1-C4 alkyl, and C6-C10 aromatic or heteroaromatic which may be substituted with -F, -Cl, -Br, phenyl and C1-C4 alkyl; R⁴ is selected from the group consisting of H, C1-C4 alkyl optionally substituted by OH or (OCH₂CHR⁹)ₓOH wherein each R⁹ is independently selected from H, methyl, and ethyl and x is 1 to 20; R⁵ is H, R⁶ and R⁸ are selected from H and C2-C4 alkylene that combine with one of more of R⁷ and R^{7'} to form a heterocyclic ring; R⁷ and R^{7'} are selected from the group consisting of H and organic groups that have mass less than 350 Daltons, wherein R⁷ and R^{7'} may combine with one another to form a heterocyclic ring; and wherein the weight of the brightener is from 160 to no more than 1400 Daltons, and mixtures thereof.

2. A fabric treatment composition according to claim 1 wherein the composition is a liquid.

3. A fabric treatment composition according to claim 1 or claim 2 additionally comprising optionally substituted alkylphthalimide, preferably N-butylphthimide, preferably in an amount from 0.0001 to 0.5 g/l.

4. A fabric treatment composition according to any preceding claim additionally comprises from 0.005 to 10 wt% of a dye transfer inhibitor preferably selected from the group comprising polyvinylpyrrolidone polymers, polyamine N-oxide polymers, copolymers of N-vinylpyrrolidone and N-vinylimidazole, polyvinyloxazolidones and polyvinylimidazoles or mixtures thereof, preferably copolymers of N-vinylpyrrolidone and N-vinylimidazole and/or polyamine N-oxide polymers.

5. A fabric treatment composition according to any preceding claim comprising an additional optical brightener having a ClogP from 0 to -50, preferably selected from stilbene optical brighteners, most preferably sodium 2(4-styryl-3-sulfophenyl)-2H-napthol[1,2-djtriazole, disodium 4,4'-bis{[(4-anilino-6-{Nmethyl-N-2hydroxyethyl)amino1,3,5-triazin-2-yl) ]amino}stilbeno-2-2'disulfonate, disodium 4,4'-bis[(4-anilino-6-morpholino-1,3,5-triazin-2-yl) amino]stilbene-2-2'disulfonate, disodium 4,4'-bis(2-sulfostyryl)biphenyl and mixtures thereof.

6. A fabric treatment composition according to any preceding claim wherein the fabric shading dye comprises a blue or violet fabric shading dye, preferably a polymeric thiophene dye, most preferably comprising a polyalkylene oxide polymeric chain having an average of from 3 to 30 polyalkylene oxide monomers.

7. A fabric treatment composition according to any preceding claim in which the fabric shading dye comprises a mono-azo, di-azo, triarylmethane, azine or anthraquinone dye, or mixtures thereof.

8. A fabric treatment composition according to any preceding claim additionally comprising from 2 to 70 wt% anionic and/or nonionic surfactant, preferably selected from alkyl benzene sulphonate, optionally ethoxylated alkyl sulphate, and alkoxylated nonionic surfactant.

9. A fabric treatment composition according to any preceding claim in the form of a unit dose pouch, preferably a multi-compartment unit dose product.

10. A method of treating a textile, the method comprising the steps of: (i) treating a textile with an aqueous solution comprising from 1ppb to 10ppm of a fabric shading dye and 1ppb to 50ppm of an optical brightener having ClogP from 1 to 50 wherein the optical brightener is a coumarinic brightener selected from compounds of Formula I 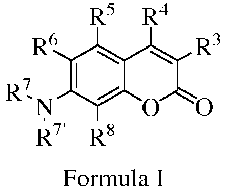 wherein R³ is selected from the group consisting of H, C1-C4 alkyl, and C6-C10 aromatic or heteroaromatic which may be substituted with -F, -Cl, -Br, phenyl and C1-C4 alkyl; R⁴ is selected from the group consisting of H, C1-C4 alkyl optionally substituted by OH or (OCH₂CHR⁹)ₓOH wherein each R⁹ is independently selected from H, methyl, and ethyl and x is 1 to 20; R⁵ is H, R⁶ and R⁸ are selected from H and C2-C4 alkylene that combine with one of more of R⁷ and R^{7'} to form a heterocyclic ring; R⁷ and R^{7'} are selected from the group consisting of H and organic groups that have mass less than 350 Daltons, wherein R⁷ and R^{7'} may combine with one another to form a heterocyclic ring; and wherein the weight of the brightener is from 160 to no more than 1400 Daltons, and mixtures thereof; and (ii) rinsing and drying the textile, preferably the aqueous solution also comprises from 0.2 g/L to 5 g/L of a surfactant.

11. A method according to claim 10, wherein the aqueous solution is formed by mixing a fabric treatment composition according to any of claims 1 to 9 with water.

12. A method according to claim 10 or claim 11 wherein the textile is contacted with the aqueous solution at a temperature of 30°C, or 25°C or below.

## Patentansprüche

1. Textilbehandlungszusammensetzung, umfassend von 0,0001 bis 0,1 Gew.-% Textilschattierungsfarbstoff und von 0,0001 bis 10 Gew.-% einen optischen Aufheller mit einem ClogP von 1 bis 50, wobei der optische Aufheller ein cumarinischer Aufheller ist, ausgewählt aus Verbindungen der Formel I 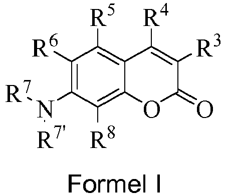 worin R³ ausgewählt ist aus der Gruppe bestehend aus H, C1-C4-Alkyl und aromatischem oder heteroaromatischem C6-C10, das mit -F, -Cl, -Br, Phenyl und C1-C4-Alkyl substituiert sein kann; R⁴ ausgewählt ist aus der Gruppe bestehend aus H, C1-C4-Alkyl, wahlweise substituiert mit OH oder (OCH₂CHR⁹)ₓOH, worin jedes R⁹ unabhängig ausgewählt ist aus H, Methyl und Ethyl und x 1 bis 20 ist; und R⁵ H ist, und R⁶ und R⁸ ausgewählt sind aus H und C2-C4-Alkylen, die sich mit einem von mehreren von R⁷ und R^{7'} kombinieren, um einen heterocyclischen Ring zu bilden; und R⁷ und R^{7'} ausgewählt sind aus der Gruppe bestehend aus H und organischen Gruppen, die eine Masse von weniger als 350 Dalton aufweisen, wobei sich R⁷ und R^{7'} miteinander kombinieren können, um einen heterocyclischen Ring zu bilden; und wobei das Gewicht des Aufhellers von 160 bis nicht mehr als 1400 Dalton beträgt, und Mischungen davon.

2. Textilbehandlungszusammensetzung nach Anspruch 1, wobei die Zusammensetzung eine Flüssigkeit ist.

3. Textilbehandlungszusammensetzung nach Anspruch 1 oder Anspruch 2, zusätzlich umfassend wahlweise substituiertes Alkylphthalimid, vorzugsweise N-Butylphthimid, vorzugsweise in einer Menge von 0,0001 bis 0,5 g/l.

4. Textilbehandlungszusammensetzung nach einem der vorstehenden Ansprüche, zusätzlich umfassend von 0,005 bis 10 Gew.-% eines Farbübertragungshemmers, vorzugsweise ausgewählt aus der Gruppe umfassend Polyvinylpyrrolidonpolymere, Polyamin-N-Oxid-Polymere, Copolymere von N-Vinylpyrrolidon und N-Vinylimidazol, Polyvinyloxazolidone und Polyvinylimidazole oder Mischungen davon, vorzugsweise Copolymere von N-Vinylpyrrolidon und N-Vinylimidazol und/oder Polyamin-N-Oxid-Polymere.

5. Textilbehandlungszusammensetzung nach einem der vorstehenden Ansprüche, umfassend einen zusätzlichen optischen Aufheller mit einem ClogP von 0 bis -50, vorzugsweise ausgewählt aus stilbenbasierten optischen Aufhellern, am meisten bevorzugt Natrium-2-(4-styryl-3-sulfophenyl)-2H-napthol-[1,2-djtriazol, Dinatrium-4,4'-bis{[(4-anilin-6-{N-methyl-N-2-hydroxyethyl)amino-1,3,5-triazin-2-yl)]amino}-stilben-2-2'-disulfonat, Dinatrium-4,4'-bis[(4-anilin-6-morpholin-1,3,5-triazin-2-yl)amino]stilben-2-2'-disulfonat, Dinatrium-4,4'-bis(2-sulfostyryl)biphenyl und Mischungen davon.

6. Textilbehandlungszusammensetzung nach einem der vorstehenden Ansprüche, wobei der Textilschattierungsfarbstoff einen blauen oder violetten Textilschattierungsfarbstoff, vorzugsweise einen polymeren Thiophenfarbstoff, umfasst, am meisten bevorzugt eine Polyalkylenoxid-Polymerkette mit einem Durchschnitt von 3 bis 30 Polyalkylenoxid-Monomeren umfassend.

7. Textilbehandlungszusammensetzung nach einem der vorstehenden Ansprüche, in der der Textilschattierungsfarbstoff einen Monoazo-, Diazo-, Triarylmethan-, Azin- oder Anthrachinonfarbstoff oder Mischungen davon umfasst.

8. Textilbehandlungszusammensetzung nach einem der vorstehenden Ansprüche, zusätzlich umfassend von 2 bis 70 Gew.-% anionisches und/oder nichtionisches Tensid, vorzugsweise ausgewählt aus Alkylbenzolsulfonat, wahlweise ethoxyliertem Alkylsulfat und alkoxyliertem nichtionischem Tensid.

9. Textilbehandlungszusammensetzung nach einem der vorstehenden Ansprüche in Form eines Einheitsdosisbeutels, vorzugsweise eines Mehrkammer-Einheitsdosisprodukts.

10. Verfahren zum Behandeln eines Textils, wobei das Verfahren die folgenden Schritte umfasst: (i) Behandeln eines Textils mit einer wässrigen Lösung, die von 1 ppb bis 10 ppm eines Textilschattierungsfarbstoffs und 1 ppb bis 50 ppm eines optischen Aufhellers mit ClogP von 1 bis 50 umfasst, wobei der optische Aufheller ein cumarinischer Aufheller ist, ausgewählt aus Verbindungen der Formel I 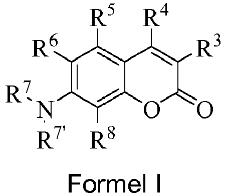 worin R³ ausgewählt ist aus der Gruppe bestehend aus H, C1-C4-Alkyl und aromatischem oder heteroaromatischem C6-C10, das mit-F, -Cl, -Br, Phenyl und C1-C4-Alkyl substituiert sein kann; R⁴ ausgewählt ist aus der Gruppe bestehend aus H, C1-C4-Alkyl, wahlweise substituiert mit OH oder (OCH₂CHR⁹)ₓOH, worin jedes R⁹ unabhängig ausgewählt ist aus H, Methyl und Ethyl und x von 1 bis 20 ist; R⁵ H ist, und R⁶ und R⁸ ausgewählt sind aus H und C2-C4-Alkylen, die sich mit einem von mehreren von R⁷ und R^{7'} kombinieren, um einen heterocyclischen Ring zu bilden; R⁷ und R^{7'} ausgewählt sind aus der Gruppe bestehend aus H und organischen Gruppen, die eine Masse von weniger als 350 Dalton aufweisen, wobei sich R⁷ und R^{7'} miteinander kombinieren können, um einen heterocyclischen Ring zu bilden; und wobei das Gewicht des Aufhellers von 160 bis nicht mehr als 1400 Dalton beträgt, und Mischungen davon; und (ii) Spülen und Trocknen des Textils, wobei die wässrige Lösung vorzugsweise auch von 0,2 g/l bis 5 g/l eines Tensids umfasst.

11. Verfahren nach Anspruch 10, wobei die wässrige Lösung durch Mischen einer Textilbehandlungszusammensetzung nach einem der Ansprüche 1 bis 9 mit Wasser gebildet wird.

12. Verfahren nach Anspruch 10 oder Anspruch 11, wobei das Textil mit der wässrigen Lösung bei einer Temperatur von 30 °C oder 25 °C oder darunter in Kontakt gebracht wird.

## Revendications

1. Composition de traitement des tissus comprenant de 0,0001 à 0,1 % en poids de teinture de nuançage des tissus et de 0,0001 à 10 % en poids d'un azurant optique ayant un ClogP allant de 1 à 50, dans laquelle l'azurant optique est un azurant coumarinique choisi parmi les composés de Formule I 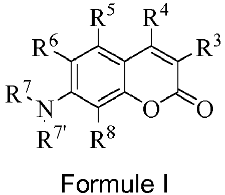 dans laquelle R³ est choisi dans le groupe constitué de H, alkyle en C1 à C4, et composé aromatique ou hétéroaromatique en C6 à C10 qui peut être substitué par -F, -Cl, -Br, phényle et alkyle en C1 à C4 ; R⁴ est choisi dans le groupe constitué de H, alkyle en C1 à C4 éventuellement substitué par OH ou (OCH₂CHR⁹)ₓOH dans laquelle chaque R⁹ est indépendamment choisi parmi H, méthyle et éthyle et x va de 1 à 20 ; R⁵ est H, R⁶ et R⁸ sont choisis parmi H et alkylène en C2 à C4 qui se combinent avec un de plusieurs de R⁷ et R^{7'} pour former un noyau hétérocyclique ; R⁷ et R^{7'} sont choisis dans le groupe constitué de H et de groupes organiques qui ont une masse inférieure à 350 Daltons, dans laquelle R⁷ et R^{7'} peuvent se combiner l'un avec l'autre pour former un noyau hétérocyclique ; et dans laquelle le poids de l'azurant va de 160 à pas plus de 1400 Daltons, et des mélanges de ceux-ci.

2. Composition de traitement des tissus selon la revendication 1, dans laquelle la composition est un liquide.

3. Composition de traitement des tissus selon la revendication 1 ou la revendication 2, comprenant en outre un alkylphtalimide éventuellement substitué, de préférence un N-butylphtimide, de préférence en une quantité allant de 0,0001 à 0,5 g/L.

4. Composition de traitement des tissus selon l'une quelconque revendication précédente, comprenant en outre de 0,005 à 10 % en poids d'un inhibiteur de décoloration choisi de préférence parmi le groupe comprenant des polymères de polyvinylpyrrolidone, des polymères de polyamine N-oxyde, des copolymères de N-vinylpyrrolidone et de N-vinylimidazole, des polyvinyloxazolidones et des polyvinylimidazoles des mélanges de ceux-ci, de préférence des copolymères de N-vinylpyrrolidone et de N-vinylimidazole et/ou des polymères polyamine N-oxyde.

5. Composition de traitement des tissus selon l'une quelconque revendication précédente, comprenant un azurant optique supplémentaire ayant un ClogP allant de 0 à -50, choisi de préférence parmi des azurants optiques stilbène, le plus préférablement le sodium 2(4-styryl-3-sulfophényl)-2H-naphtol [1,2-djtriazole, le disodium 4,4'-bis{[(4-anilino-6-{N-méthyl-N-2-hydroxyéthyl)amino-1,3,5-triazin-2-yl)]amino}stilbéno-2-2'-disulfonate, le disodium 4,4'-bis[(4-anilino-6-morpholino-1,3,5-triazin-2-yl)amino]-stilbène-2-2'-disulfonate, le disodium 4,4'-bis-(2-sulfostyryl)-biphényle et des mélanges de ceux-ci.

6. Composition de traitement des tissus selon l'une quelconque revendication précédente, dans laquelle la teinture de nuançage des tissus comprend une teinture de nuançage des tissus bleue ou violette, de préférence une teinture thiophène polymère, le plus préférablement comprenant une chaîne polymère poly(oxyde d'alkylène) ayant une moyenne allant de 3 à 30 monomères poly(oxyde d'alkylène).

7. Composition de traitement des tissus selon l'une quelconque revendication précédente, dans laquelle la teinture de nuançage des tissus comprend une teinture mono-azoïque, di-azoïque, triarylméthane, azine ou anthraquinone, ou des mélanges de celles-ci.

8. Composition de traitement des tissus selon l'une quelconque revendication précédente, comprenant en outre de 2 à 70 % en poids d'agent tensioactif anionique et/ou non ionique, choisi de préférence parmi un sulfonate d'alkylbenzène, un sulfate d'alkyle éventuellement éthoxylé, et un agent tensioactif non ionique alcoxylé.

9. Composition de traitement des tissus selon l'une quelconque revendication précédente, sous la forme d'un sachet à dose unitaire, de préférence un produit en dose unitaire à compartiments multiples.

10. Procédé de traitement d'un textile, le procédé comprenant les étapes consistant à : (i) traiter un textile avec une solution aqueuse comprenant de 1 ppm à 10 ppm d'une teinture de nuançage des tissus et 1 ppm à 50 ppm d'un azurant optique ayant un ClogP allant de 1 à 50, dans lequel l'azurant optique est un azurant coumarinique choisi parmi les composés de Formule I 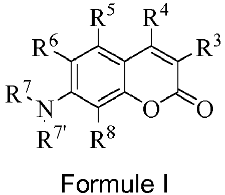 dans lequel R³ est choisi dans le groupe constitué de H, alkyle en C1 à C4, et composé aromatique ou hétéroaromatique en C6 à C10 qui peut être substitué par -F, -Cl, -Br, phényle et alkyle en C1 à C4 ; R⁴ est choisi dans le groupe constitué de H, alkyle en C1 à C4 éventuellement substitué par OH ou (OCH₂CHR⁹)ₓOH dans lequel chaque R⁹ est indépendamment choisi parmi H, méthyle et éthyle et x va de 1 à 20 ; R⁵ est H, R⁶ et R⁸ sont choisis parmi H et alkylène en C2 à C4 qui se combinent avec un de plusieurs de R⁷ et R^{7'} pour former un noyau hétérocyclique ; R⁷ et R^{7'} sont choisis dans le groupe constitué de H et de groupes organiques qui ont une masse inférieure à 350 Daltons, dans lequel R⁷ et R^{7'} peuvent se combiner l'un avec l'autre pour former un noyau hétérocyclique ; et dans lequel le poids de l'azurant va de 160 à pas plus de 1400 Daltons, et des mélanges de ceux-ci ; et (ii) rincer et sécher le textile, de préférence la solution aqueuse comprend également de 0,2 g/L à 5 g/L d'un agent tensioactif.

11. Procédé selon la revendication 10, dans lequel la solution aqueuse est formée en mélangeant une composition de traitement des tissus selon l'une quelconque des revendications 1 à 9 avec de l'eau.

12. Procédé selon la revendication 10 ou la revendication 11, dans lequel le textile est mis en contact avec la solution aqueuse à une température de 30 °C, ou 25 °C ou moins.
